# EUROPEAN PATENT APPLICATION

(11) **EP 4 149 192 A1**
(43) Date of publication of application: **15.03.2023**
(21) Application number: 21817101.5
(22) Date of filing: 04.06.2021
(51) Int. Cl.: H04W 72/04

(54) **METHOD FOR SENDING TRIGGER FRAME, METHOD FOR RECEIVING TRIGGER FRAME, AND COMMUNICATION APPARATUS**

(30) Priority: 05.06.2020 CN 202010505165
(71) Applicant: Huawei Technologies Co., Ltd., Longgang Shenzhen, Guangdong 518129 (CN)
(72) Inventor: HU, Mengshi, Shenzhen, Guangdong 518129 (CN); YU, Jian, Shenzhen, Guangdong 518129 (CN); GAN, Ming, Shenzhen, Guangdong 518129 (CN); LIANG, Dandan, Shenzhen, Guangdong 518129 (CN)
(74) Representative: Huawei European IPR
(86) International application number: PCT/CN2021/098448
(87) International publication number: WO 2021/244647

(57) **Abstract**

This application provides a method for sending a trigger frame and a communication apparatus. The method includes: An access point AP generates a trigger frame, where the trigger frame includes a first user information field corresponding to a first station STA, the first user information field includes a first spatial stream allocation subfield and first information, the first information indicates a mode in which the first STA transmits data, the mode includes an MU-MIMO mode or a non-MU-MIMO mode, and spatial stream allocation information that is carried in the first spatial stream allocation subfield and that is of the first STA corresponds to content indicated in the first information; and the AP sends the trigger frame. 1-bit first information is added to the user information field, so that spatial stream allocation information in an MU-MIMO mode and spatial stream allocation information in a non-MU-MIMO mode can be separately indicated. This reduces overheads of the spatial stream allocation information.

## Description

This application claims priority to Patent Application No. 202010505165.X, filed with the China National Intellectual Property Administration on June 5, 2020 and entitled "METHOD FOR SENDING TRIGGER FRAME, METHOD FOR RECEIVING TRIGGER FRAME, AND COMMUNICATION APPARATUS", which is incorporated herein by reference in its entirety.

### TECHNICAL FIELD

Embodiments of this application relate to the communication field, and more specifically, to a method for sending a trigger frame, a method for receiving a trigger frame, and a communication apparatus.

### BACKGROUND

With development of communication technologies, a trigger-based and scheduling-based uplink transmission method is introduced into a WLAN (Wireless Local Area Network, wireless local area network) technology.

That is, an access point (Access Point, AP) first sends a trigger frame, where the trigger frame includes one or more user information fields, each user information field corresponds to one STA, and information carried in the user information field indicates resource scheduling and another parameter for one or more stations (Station, STA) to send an uplink physical layer protocol data unit (PHY Protocol Data Unit, PPDU).

After receiving the trigger frame, the STA parses out the user information field of the STA from the trigger frame, and then sends uplink data based on the information carried in the user information field.

In a conventional technology, the user information field includes a spatial stream allocation subfield (Spatial Stream Allocation subfield, SS Allocation subfield), used to carry information about a spatial stream (Spatial Stream, SS) allocated by the AP to the STA (spatial stream allocation information for short). For example, the spatial stream allocation information includes quantity information of the SS and starting location information of the SS.

In the conventional technology, the spatial stream allocation subfield includes 6 bits. The starting location information occupies 3 bits and can indicate eight possible locations. The quantity information occupies 3 bits and can indicate eight possible quantities.

In addition, in the conventional technology, a maximum quantity of the SSs of the STA is 8. Therefore, the spatial stream allocation subfield can meet a requirement in the conventional technology.

However, with WLAN version evolution, an uplink transmission bandwidth increases, and a maximum quantity of spatial streams of a STA increases to 16 or even more.

How to reduce overheads of the spatial stream allocation information becomes an urgent problem to be resolved in the industry.

### SUMMARY

This application provides a method for sending a trigger frame, a method for receiving a trigger frame, and a communication apparatus, to reduce overheads of spatial stream allocation information.

According to a first aspect, a method for sending a trigger frame is provided. The method includes: An access point AP generates a trigger frame, where the trigger frame includes a first user information field corresponding to a first station STA, the first user information field includes a first spatial stream allocation subfield and first information, the first information indicates a mode in which the first STA transmits data, the mode includes a multi-user multiple input multiple output MU-MIMO mode or a non multi-user multiple input multiple output non-MU-MIMO mode, and spatial stream allocation information that is carried in the first spatial stream allocation subfield and that is of the first STA corresponds to content indicated in the first information; and the AP sends the trigger frame.

For example, when a maximum quantity of spatial streams of the STA is 16, a maximum quantity of spatial streams of each user in an MU-MIMO mode is 4. 4 bits are needed to indicate a quantity of spatial streams, and 4 bits are needed to indicate a starting location. That is, overhead of the spatial stream allocation information is 8 bits, to jointly indicate overheads of the spatial stream allocation information in an MU-MIMO mode and a non-MU-MIMO mode as shown in the following Table 1.

**Table 1**

| SS Allocation subfield | Number of spatial streams | Starting spatial stream |
|---|---|---|
| | Quantity of spatial streams | Starting spatial stream (or starting spatial stream location) |
| 0-15 | 1-16 | 1 |
| 16-31 | 1-16 | 2 |
| 32-47 | 1-16 | 3 |
| 48-63 | 1-16 | 4 |
| 64-79 | 1-16 | 5 |
| 80-95 | 1-16 | 6 |
| 96-101 | 1-16 | 7 |
| 102-117 | 1-16 | 8 |
| 118-133 | 1-16 | 9 |
| 134-149 | 1-16 | 10 |
| 150-165 | 1-16 | 11 |
| 166-181 | 1-16 | 12 |
| 182-207 | 1-16 | 13 |
| 208-223 | 1-16 | 14 |
| 224-239 | 1-16 | 15 |
| 240-255 | 1-16 | 16 |

In this implementation of this application, "a value indicated by an index" has a same meaning as "a value of an index" and "an index value", and represents a value corresponding to a binary index (that is, one or more bits), for example, a decimal value. To avoid repetition, descriptions of a same or similar case are omitted below.

It should be noted that in this implementation of this application, an index value in each table is a decimal number. However, in actual application, the index value is a binary bit value corresponding to a decimal number. For example, a decimal index value 1 corresponds to a binary bit 0. For another example, a decimal index value 2 corresponds to a binary bit 1. By analogy, a decimal index value 16 corresponds to binary bits 1111. To avoid repetition, descriptions of a same or similar case are omitted below.

That is, as shown in Table 1, the overheads for jointly indicating the spatial stream allocation information in an MU-MIMO mode and a non-MU-MIMO mode are 8 bits (256 values need to be indicated), which are more than bits (6 bits) included in an existing spatial stream allocation subfield.

In contrast, in this implementation of this application, the 1-bit first information is added to the user information field, so that spatial stream allocation information in an MU-MIMO mode and spatial stream allocation information in a non-MU-MIMO mode can be separately indicated.

Similarly, when the maximum quantity of spatial streams of the STA is 16, the maximum quantity of spatial streams of each user in an MU-MIMO mode is 4. In the spatial stream allocation information in an MU-MIMO mode, a starting stream location may be indicated by using 4 bits, and a quantity of spatial streams may be indicated by using 2 bits. In the spatial stream allocation information in a non-MU-MIMO mode, a quantity of spatial streams may be indicated by using 4 bits.

To be specific, according to the solution provided in this implementation of this application, a maximum of 7 bits are needed to meet a requirement of the spatial stream allocation information. Compared with a conventional technology, the overheads of the spatial stream allocation information can be reduced.

Optionally, when the first information indicates that the first STA transmits data in an MU-MIMO mode, the spatial stream allocation information corresponding to the first STA includes starting stream location information and first stream quantity information, where the starting stream location information indicates a starting location of a stream corresponding to the first STA, and the first stream quantity information indicates a quantity of streams corresponding to the first STA.

Optionally, when the first information indicates that the first STA transmits data in a non-MU-MIMO mode, the spatial stream allocation information corresponding to the first STA includes second stream quantity information, where the second stream quantity information indicates a quantity of streams corresponding to the first STA.

Optionally, the starting stream location information occupies 4 bits, the first stream quantity information occupies 2 bits, and the second stream quantity information occupies 4 bits.

Optionally, when the first information indicates that the first STA transmits data in an MU-MIMO mode, the first spatial stream allocation subfield occupies 6 bits.

Optionally, when the first information indicates that the first STA transmits data in a non-MU-MIMO mode, the first spatial stream allocation subfield occupies 4 bits.

Therefore, compared with an existing spatial stream allocation subfield, a quantity of bits is reduced, and the reduced bits can be used to carry other information. Communication flexibility can be improved, and practicability of this application can be further improved.

For example, compared with the existing spatial stream allocation field, one of the 2 save bits may be used to carry the first information.

Optionally, the first information occupies at least 1 bit.

Optionally, the first information is carried in a reserved subfield in the first user information field.

Therefore, an existing reserved field can be used to carry the first information without changing a structure of an existing trigger frame, so that practicability and compatibility of this application can be further improved.

Optionally, the first information is carried in an uplink forward error correction coding type subfield in the first user information field.

Specifically, when information carried in a resource unit allocation subfield indicates that a quantity of subcarriers corresponding to a resource unit group (including at least one resource unit) is greater than a required quantity of subcarriers (for example, 242) corresponding to a data coding scheme, the coding scheme does not need to be indicated. In this case, the uplink forward error correction coding type subfield does not need to carry information about the coding scheme.

In this case, the first information may be carried in the uplink forward error correction coding type subfield.

Alternatively, in this case, the user information field does not include an uplink forward error correction coding type subfield, so that a saved field (or in other words, a bit) may be used to carry the first information.

Therefore, the reserved field does not need to be occupied, and practicability and compatibility of this application can be further improved.

Optionally, the first information is carried in a resource unit allocation subfield in the first user information field.

Specifically, the resource unit allocation subfield includes 8 bits, the 8 bits include 256 index values, and the 256 index values include a reserved index value, so that a function of the first information can be implemented by using the reserved index value.

Alternatively, the resource unit allocation subfield includes 9 bits, the 9 bits include 512 index values, and the 512 index values include a reserved index value, so that a function of the first information can be implemented by using the reserved index value.

Optionally, the first user information field includes a resource unit allocation subfield, the resource unit allocation subfield is used to carry a first resource unit group corresponding to the first STA, the first resource unit group includes at least one resource unit, and when a quantity of subcarriers corresponding to the first resource unit group is greater than a first threshold, the first user information field does not include an uplink forward error correction coding type subfield, where the first threshold is determined based on a required quantity of subcarriers corresponding to a data coding scheme.

Optionally, the first threshold is 242.

Optionally, the first user information field includes the resource unit allocation subfield, the resource unit allocation subfield is used to carry the first resource unit group corresponding to the first STA, the first resource unit group includes at least one resource unit, and when the quantity of subcarriers corresponding to the first resource unit group is less than a second threshold, the first STA transmits data in a non-MLT-MIMO mode by default, where the second threshold is determined based on a quantity of subcarriers corresponding to an MU-MIMO mode.

Optionally, the second threshold is 242 or 484.

Optionally, the first user information field includes the resource unit allocation subfield, the resource unit allocation subfield is used to carry the first resource unit group corresponding to the first STA, the first resource unit group includes at least one resource unit, and when the quantity of subcarriers corresponding to the first resource unit group is equal to the first threshold, and the quantity of subcarriers corresponding to the first resource unit group is equal to the second threshold, data coding information is carried in the resource unit allocation subfield in the first user information field.

Optionally, the first user information field includes the resource unit allocation subfield, the resource unit allocation subfield is used to carry the first resource unit group corresponding to the first STA, the first resource unit group includes at least one resource unit, and when the quantity of subcarriers corresponding to the first resource unit group is equal to the first threshold, and the quantity of subcarriers corresponding to the first resource unit group is equal to the second threshold, the first information is carried in the resource unit allocation subfield in the first user information field, where the first threshold is determined based on the required quantity of subcarriers corresponding to the data coding scheme, and the second threshold is determined based on the required quantity of subcarriers corresponding to an MU-MIMO mode.

Optionally, the first user information field includes the resource unit allocation subfield, the resource unit allocation subfield is used to carry a first resource unit corresponding to the first STA, and when a bandwidth indicated in an uplink bandwidth subfield in a common information field of the trigger frame is greater than a third threshold, the resource unit allocation subfield includes 9 bits.

Optionally, the third threshold is 160 MHz.

According to a second aspect, a method for receiving a trigger frame is provided. The method includes: A first station STA receives a trigger frame, where the trigger frame includes a first user information field corresponding to the first STA, the first user information field includes a first spatial stream allocation subfield and first information, the first information indicates a mode in which the first STA transmits data, the mode includes a multi-user multiple input multiple output MU-MIMO mode or a non multi-user multiple input multiple output non-MU-MIMO mode, and spatial stream allocation information that is carried in the first spatial stream allocation subfield and that is of the first STA corresponds to content indicated in the first information; and the first STA sends uplink data based on information carried in the first user information field.

According to the solution provided in this application, when a maximum quantity of spatial streams of the STA is 16, a maximum of 7 bits are needed to meet a requirement of the spatial stream allocation information. Therefore, compared with a conventional technology, overheads of the spatial stream allocation information can be reduced.

Optionally, when the first information indicates that the first STA transmits data in an MU-MIMO mode, the spatial stream allocation information corresponding to the first STA includes starting stream location information and first stream quantity information, where the starting stream location information indicates a starting location of a stream corresponding to the first STA, and the first stream quantity information indicates a quantity of streams corresponding to the first STA. When the first information indicates that the first STA transmits data in a non-MU-MIMO mode, the spatial stream allocation information corresponding to the first STA includes second stream quantity information, where the second stream quantity information indicates a quantity of streams corresponding to the first STA.

Optionally, the starting stream location information occupies 4 bits, the first stream quantity information occupies 2 bits, and the second stream quantity information occupies 4 bits.

Optionally, when the first information indicates that the first STA transmits data in an MU-MIMO mode, the first spatial stream allocation subfield occupies 6 bits. When the first information indicates that the first STA transmits data in a non-MU-MIMO mode, the first spatial stream allocation subfield occupies 4 bits.

Optionally, the first information occupies at least 1 bit.

Optionally, the first information is carried in a reserved subfield in the first user information field.

Optionally, the first information is carried in an uplink forward error correction coding type subfield in the first user information field.

Optionally, the first information is carried in a resource unit allocation subfield in the first user information field.

Optionally, the first user information field includes a resource unit allocation subfield, the resource unit allocation subfield is used to carry a first resource unit group corresponding to the first STA, the first resource unit group includes at least one resource unit, and when a quantity of subcarriers corresponding to the first resource unit group is greater than a first threshold, the first user information field does not include an uplink forward error correction coding type subfield, where the first threshold is determined based on a required quantity of subcarriers corresponding to a data coding scheme.

Optionally, the first threshold is 242.

Optionally, the first user information field includes the resource unit allocation subfield, the resource unit allocation subfield is used to carry the first resource unit group corresponding to the first STA, the first resource unit group includes at least one resource unit, and when the quantity of subcarriers corresponding to the first resource unit group is less than a second threshold, the first STA transmits data in a non-MU-MIMO mode by default, where the second threshold is determined based on a quantity of subcarriers corresponding to an MU-MIMO mode.

Optionally, the second threshold is 242 or 484.

Optionally, the first user information field includes the resource unit allocation subfield, the resource unit allocation subfield is used to carry the first resource unit group corresponding to the first STA, the first resource unit group includes at least one resource unit, and when the quantity of subcarriers corresponding to the first resource unit group is equal to the first threshold, and the quantity of subcarriers corresponding to the first resource unit group is equal to the second threshold, data coding information is carried in the resource unit allocation subfield in the first user information field.

Optionally, the first user information field includes the resource unit allocation subfield, the resource unit allocation subfield is used to carry the first resource unit group corresponding to the first STA, the first resource unit group includes at least one resource unit, and when the quantity of subcarriers corresponding to the first resource unit group is equal to the first threshold, and the quantity of subcarriers corresponding to the first resource unit group is equal to the second threshold, the first information is carried in the resource unit allocation subfield in the first user information field, where the first threshold is determined based on the required quantity of subcarriers corresponding to the data coding scheme, and the second threshold is determined based on the required quantity of subcarriers corresponding to an MU-MIMO mode.

Optionally, the first user information field includes the resource unit allocation subfield, the resource unit allocation subfield is used to carry a first resource unit corresponding to the first STA, and when a bandwidth indicated in an uplink bandwidth subfield in a common information field of the trigger frame is less than a third threshold, the first STA transmits data in a non-MU-MIMO mode by default, where the third threshold is determined based on a required bandwidth corresponding to an MU-MIMO mode.

Optionally, the third threshold is 160 MHz.

According to a third aspect, a method for sending a trigger frame is provided. The method includes: An access point AP sends a trigger frame, where the trigger frame includes a first user information field corresponding to a first station STA, the first user information field includes a first spatial stream allocation subfield, and the first spatial stream allocation subfield carries a first index value in first mapping information, where a first mapping relationship indicates a correspondence between a plurality of index values and a plurality of pieces of spatial stream allocation information, each piece of spatial stream allocation information includes starting stream location information and stream quantity information, the first index value corresponds to spatial stream allocation information of the first STA, and the plurality of pieces of spatial stream allocation information include a plurality of pieces of first spatial stream allocation information, a plurality of pieces of second spatial stream allocation information, and a plurality of pieces of third spatial stream allocation information, where the first spatial stream allocation information is spatial stream allocation information shared by a multi-user multiple input multiple output MU-MIMO mode and a non-multi-user multiple input multiple output non-MU-MIMO mode, the second spatial stream allocation information is spatial stream allocation information exclusive to a non-MU-MIMO mode, and the third spatial stream allocation information is spatial stream allocation information exclusive to an MU-MIMO mode; and the AP sends the trigger frame.

The mapping relationship indicating the correspondence between an index value and spatial stream allocation information includes spatial stream allocation information shared by an MU-MIMO mode and a non-MU-MIMO mode, so that a quantity of required index values can be reduced. This reduces bit overheads for carrying the index value.

Optionally, when a maximum quantity of streams in an MU-MIMO mode is 16, and a maximum quantity of streams of each STA in an MU-MIMO mode is 4, a first mapping relationship is shown in the following Table 2.

**Table 2**

| SS Allocation subfield (B26-B31 of a trigger frame) | Spatial stream allocation information | |
|---|---|---|
| | Number of spatial streams | Starting spatial stream |
| 0-3 | 1-4 | 1 |
| 4-7 | 1-4 | 2 |
| 8-11 | 1-4 | 3 |
| 12-15 | 1-4 | 4 |
| 16-19 | 1-4 | 5 |
| 20-23 | 1-4 | 6 |
| 24-27 | 1-4 | 7 |
| 28-31 | 1-4 | 8 |
| 32-35 | 1-4 | 9 |
| 36-39 | 1-4 | 10 |
| 40-43 | 1-4 | 11 |
| 44-47 | 1-4 | 12 |
| 48-51 | 1-4 | 13 |
| 52-54 | 1-3 | 14 |
| 55-56 | 1-2 | 15 |
| 57 | 1 | 16 |
| 58-X | Reserved | |

Spatial stream allocation information corresponding to index values 0 to 3 is the first spatial stream allocation information, spatial stream allocation information corresponding to index values 4 to 57 is the third spatial stream allocation information, and Y index values in index values 58 to X correspond to the second spatial stream allocation information, where Y is determined based on a maximum quantity of streams in a non-MU-MIMO mode, and X is determined based on a quantity of bits included in the first spatial stream allocation subfield.

An impossible case of spatial stream allocation is excluded from the mapping relationship. For example, a total quantity of streams cannot be greater than 16, that is, a quantity of streams of a user cannot be greater than 1 when the starting stream is the sixteenth stream, so that a quantity of required index values can be further reduced, and bit overheads for carrying the index value can be further reduced.

Optionally, in the spatial stream allocation information corresponding to an MU-MIMO mode, a value range of the starting stream location information is [1, K], and a value range of stream quantity information of spatial stream allocation information whose value of starting stream location information is k is [1, N]. k-1 streams include a plurality of allocation manners, and each allocation manner corresponds to a first value. The first value is a quantity of streams of a user to which a minimum quantity of streams are allocated in a corresponding allocation manner, N is determined based on a maximum value of a plurality of first values, and K represents a maximum quantity of streams that can be used.

Optionally, the trigger frame includes user information fields of a plurality of STAs. When the plurality of STAs are sorted in a descending order of quantities of allocated streams, a starting location of a stream of an i^{th} STA is before a starting location of a stream of an (i+1)^{th} STA.

Optionally, the first mapping relationship is shown in the following Table 3.

**Table 3**

| SS Allocation subfield | Spatial stream allocation information | |
|---|---|---|
| (B26-B31 of a trigger frame) | Number of spatial streams | Starting spatial stream |
| 0-3 | 1-4 | 1 |
| 4 | 1 | 2 |
| 5-6 | 1-2 | 3 |
| 7-9 | 1-3 | 4 |
| 10-13 | 1-4 | 5 |
| 14-15 | 1-2 | 6 |
| 16-18 | 1-3 | 7 |
| 19-21 | 1-3 | 8 |
| 22-25 | 1-4 | 9 |
| 26-28 | 1-3 | 10 |
| 29-31 | 1-3 | 11 |
| 32-34 | 1-3 | 12 |
| 35-38 | 1-4 | 13 |
| 39-41 | 1-3 | 14 |
| 42-43 | 1-2 | 15 |
| 44 | 1 | 16 |
| 45-X | Reserved | |

Spatial stream allocation information corresponding to index values 0 to 3 is the first spatial stream allocation information, spatial stream allocation information corresponding to index values 4 to 44 is the third spatial stream allocation information, and Y index values in index values 45 to X correspond to the second spatial stream allocation information, where Y is determined based on a maximum quantity of streams in a non-MU-MIMO mode, and X is determined based on a quantity of bits included in the first spatial stream allocation subfield.

According to a fourth aspect, a method for receiving a trigger frame is provided. The method includes: A first station STA receives a trigger frame from an access point AP, where the trigger frame includes a first user information field corresponding to the first station STA, the first user information field includes a first spatial stream allocation subfield, and the first spatial stream allocation subfield carries a first index value in first mapping information, where the first mapping relationship indicates a correspondence between a plurality of index values and a plurality of pieces of spatial stream allocation information, each piece of spatial stream allocation information includes starting stream location information and stream quantity information, the first index value corresponds to spatial stream allocation information of the first STA, and the plurality of pieces of spatial stream allocation information include a plurality of pieces of first spatial stream allocation information, a plurality of pieces of second spatial stream allocation information, and a plurality of pieces of third spatial stream allocation information, where the first spatial stream allocation information is spatial stream allocation information shared by a multi-user multiple input multiple output MU-MIMO mode and a non-multi-user multiple input multiple output non-MU-MIMO mode, the second spatial stream allocation information is spatial stream allocation information exclusive to a non-NW-MIMO mode, and the third spatial stream allocation information is spatial stream allocation information exclusive to an MU-MIMO mode; and the first station STA sends uplink data based on information carried in the first user information field.

The mapping relationship indicating the correspondence between an index value and spatial stream allocation information includes spatial stream allocation information shared by an MU-MIMO mode and a non-MU-MIMO mode, so that a quantity of required index values can be reduced. This reduces bit overheads for carrying the index value.

Optionally, when a maximum quantity of streams of each STA in an MU-MIMO mode is 4, the first mapping relationship is shown in the foregoing Table 2.

An impossible case of spatial stream allocation is excluded from the mapping relationship. For example, a total quantity of streams cannot be greater than 16, that is, a quantity of streams of a user cannot be greater than 1 when the starting stream is the sixteenth stream, so that a quantity of required index values can be further reduced, and bit overheads for carrying the index value can be further reduced.

Optionally, in the spatial stream allocation information corresponding to an MU-MIMO mode, a value range of the starting stream location information is [1, K], and a value range of stream quantity information of spatial stream allocation information whose value of starting stream location information is k is [1, N]. k-1 streams include a plurality of allocation manners, and each allocation manner corresponds to a first value. The first value is a quantity of streams of a user to which a minimum quantity of streams are allocated in a corresponding allocation manner, N is determined based on a maximum value of a plurality of first values, and K represents a maximum quantity of streams that can be used.

Optionally, the trigger frame includes user information fields of a plurality of STAs. When the plurality of STAs are sorted in a descending order of quantities of allocated streams, a starting location of a stream of an i^{th} STA is before a starting location of a stream of an (i+1)^{th} STA.

Optionally, the first mapping relationship is shown in the foregoing Table 3.

According to a fifth aspect, a communication apparatus is provided, including modules or units configured to perform the method in any one of the first aspect to the fourth aspect and any possible implementation of the first aspect to the fourth aspect.

According to a sixth aspect, a communication device is provided, including a processor. The processor is coupled to a memory, and may be configured to perform the method in any one of the first aspect to the fourth aspect and the possible implementations of the first aspect to the fourth aspect. Optionally, the communication device further includes the memory. Optionally, the communication device further includes a communication interface, and the processor is coupled to the communication interface.

In an implementation, the communication device is a device. In this case, the communication interface may be a transceiver or an input/output interface. In another implementation, the communication device is a chip or a chip system. In this case, the communication interface may be an input/output interface, an interface circuit, an output circuit, an input circuit, a pin, a related circuit, or the like on the chip or the chip system. The processor may alternatively be embodied as a processing circuit or a logic circuit.

According to a seventh aspect, a communication apparatus is provided, including an input circuit, an output circuit, and a processing circuit. The processing circuit is configured to receive a signal by using the input circuit, and transmit a signal by using the output circuit, so that the method in any one of the first aspect to the fourth aspect and any possible implementation of the aspects is implemented.

In a specific implementation process, the communication apparatus may be a chip. The input circuit may be an input pin. The output circuit may be an output pin. The processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be different circuits, or may be a same circuit. In this case, the circuit is used as the input circuit and the output circuit at different moments. Specific implementations of the processor and the various circuits are not limited in embodiments of this application.

According to an eighth aspect, a processing apparatus is provided, including a processor and a memory. The processor is configured to read instructions stored in the memory, receive a signal through a receiver, and transmit a signal through a transmitter, to perform the method in any one of the first aspect to the fourth aspect and the possible implementations of the first aspect to the fourth aspect.

Optionally, there are one or more processors, and there are one or more memories.

Optionally, the memory may be integrated with the processor, or the memory and the processor are separately disposed.

During specific implementation, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

It should be understood that, a related data exchange process such as sending of indication information may be a process of outputting the indication information from the processor, and receiving of capability information may be a process of receiving the input capability information by the processor. Specifically, data output by the processor may be output to a transmitter, and input data received by the processor may be from a receiver. The transmitter and the receiver may be collectively referred to as a transceiver.

The processor in the eighth aspect may be a chip. The processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may exist independently outside the processor.

According to a ninth aspect, a processing apparatus is provided, including a communication interface and a processing circuit. The communication interface is configured to send a trigger frame according to the method in the first aspect or the third aspect and any possible implementation of the first aspect or the third aspect, and the processing circuit is configured to generate the trigger frame.

According to a tenth aspect, a processing apparatus is provided, including a communication interface and a processing circuit. The communication interface is configured to obtain a to-be-processed trigger frame, and the processing circuit is configured to process the to-be-processed trigger frame according to the method in the second aspect or the fourth aspect and any possible implementation of the second aspect or the fourth aspect.

According to an eleventh aspect, a computer program product is provided. The computer program product includes a computer program (which may also be referred to as code or instructions). When the computer program is run, a computer is enabled to perform the method according to any one of the first aspect to the fourth aspect and any possible implementation of the aspects.

According to a twelfth aspect, a computer-readable medium is provided. The computer-readable medium stores a computer program (which may also be referred to as code or instructions). When the computer program is run on a computer, the computer is enabled to perform the method according to any one of the first aspect to the fourth aspect and any possible implementation of the aspects.

According to a thirteenth aspect, a communication system is provided, including the foregoing AP and STA.

### BRIEF DESCRIPTION OF DRAWINGS

FIG. 1 is a schematic diagram of an example of a communication system according to this application;
FIG. 2 is a schematic diagram of an example of channel distribution according to this application;
FIG. 3 is a schematic diagram of an example of a trigger frame transmission procedure according to this application;
FIG. 4 is a schematic diagram of an example of a frame structure of a trigger frame according to this application;
FIG. 5 is a schematic diagram of another example of a frame structure of a trigger frame according to this application;
FIG. 6 is a schematic diagram of an example of a user information field according to this application;
FIG. 7 is a schematic diagram of an example of interaction in a trigger frame transmission procedure according to this application;
FIG. 8 is a schematic diagram of another example of a user information field according to this application;
FIG. 9 is a schematic diagram of still another example of a user information field according to this application;
FIG. 10 is a schematic diagram of yet another example of a user information field according to this application;
FIG. 11 is a schematic diagram of another example of interaction in a trigger frame transmission procedure according to this application;
FIG. 12 is a schematic diagram of an example of a communication apparatus according to this application;
FIG. 13 is a schematic diagram of another example of a communication apparatus according to this application;
FIG. 14 is a schematic diagram of still another example of a communication apparatus according to this application;
FIG. 15 is a schematic diagram of an example of an AP according to this application; and
FIG. 16 is a schematic diagram of an example of a STA according to this application.

### DESCRIPTION OF EMBODIMENTS

The following describes technical solutions of this application with reference to accompanying drawings.

The technical solutions in embodiments of this application may be applied to various communication systems, for example, a wireless local area network (wireless local area network, WLAN) communication system, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a future 5th generation (5th generation, 5G) system, or a new radio (new radio, NR) system.

As an example for description, the following describes an application scenario in embodiments of this application and a method in embodiments of this application by using a WLAN system as an example.

Specifically, embodiments of this application may be applied to a WLAN system, and embodiments of this application may be applied to any protocol in the Institute of Electrical and Electronics Engineers (institute of electrical and electronics engineers, IEEE) 802.11 series protocols currently used in a WLAN.

The WLAN may include one or more basic service sets (basic service set, BSS). A network node in the basic service set includes an access point (access point, AP) and a station (station, STA). One STA can access only one AP (in other words, the STA is associated with the AP), while one AP can be associated with a plurality of STAs. Before transmitting data, the STA and the AP need to perform beam training to obtain an optimal receive beam and/or an optimal transmit beam between the STA and the AP. Based on the original BSS, the IEEE 802.11ad introduces a personal basic service set (personal basic service set, PBSS) and a personal basic service set control point (PBSS control point, PCP). Each personal basic service set may include one PCP/AP and a plurality of stations associated with the PCP/AP.

A user station (STA) in a WLAN may also be referred to as a system, a subscriber unit, an access terminal, a mobile station, a mobile console, a remote station, a remote terminal, a mobile device, a user terminal, a terminal, a wireless communication device, a user agent, a user apparatus, or user equipment (user equipment, UE). The STA may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless local area network (for example, Wi-Fi) communication function, a wearable device, a computing device, or another processing device connected to a wireless modem.

The PCP/AP in the WLAN may be configured to communicate with the STA by using a wireless local area network, and transmit data of the STA to a network side, or transmit data from the network side to the STA.

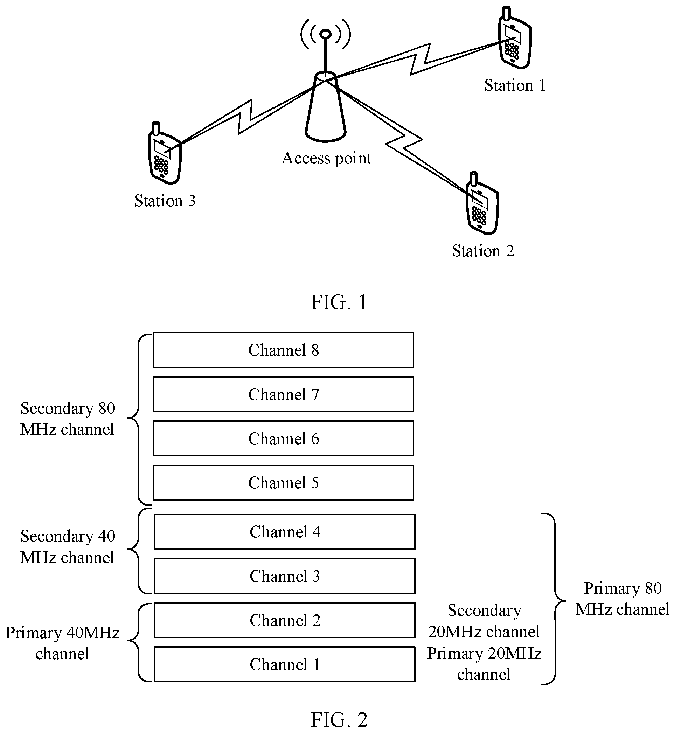

For ease of understanding embodiments of this application, a communication system shown in FIG. 1 is first used as an example to describe in detail a communication system applicable to embodiments of this application. A scenario system shown in FIG. 1 may be a WLAN system. The WLAN system in FIG. 1 may include one or more APs and one or more STAs. In FIG. 1, one AP and three STAs are used as an example. Wireless communication may be performed between the AP and the STA according to various standards. For example, wireless communication between the AP and the STA may be performed by using a single-user multiple input multiple output (single-user multiple-input multiple-output, SU-MIMO) technology or a multi-user multiple input multiple output (multi-user multiple-input multiple-output, MU-MIMO) technology.

The AP is also referred to as a wireless access point, a hotspot, or the like. The AP is an access point for a mobile user to access a wired network, and is mainly deployed in a home, a building, and a campus, or is deployed outdoors. The AP is equivalent to a bridge that connects a wired network and a wireless network. A main function of the AP is to connect wireless network clients together, and then connect the wireless network to the Ethernet. Specifically, the AP may be a terminal device or a network device with a wireless fidelity (wireless fidelity, Wi-Fi) chip. Optionally, the AP may be a device that supports a plurality of WLAN standards such as 802.11.

The WLAN starts from 802.11a/g, goes through 802.11n and 802.11ac, and goes through 802.11ax and 802.11be that are currently discussed. Allowed transmission bandwidths and quantities of space-time streams of the WLAN are respectively shown in Table 4.

**Table 4**

| | 802.11a/g | 802.11 n | 802.11ac | 802.11ax | 802.11be |
|---|---|---|---|---|---|
| Bandwidth | 20 MHz | 20/40 MHz | 20/40/80/160 MHz | 20/40/80/160 MHz | 20/40/80/160/240 MHz/320 MHz |
| Supported maximum data rate | 54 Mbps | 600 Mbps | 6.9 Gbps | 9.6 Gbps | Not less than 30 Gbps |

FIG. 2 shows an example of channel allocation in this application. As shown in FIG. 2, an entire channel is divided into a primary 20 MHz channel (or referred to as a primary channel, Primary 20 MHz, P20 for short), a secondary 20 MHz channel (Secondary 20 MHz, S20), a secondary 40 MHz channel (S40), and a secondary 80 MHz (S80) channel. In addition, there are corresponding P40 and P80. As bandwidth increases, a data transmission rate also increases. Therefore, in the next-generation standard, a larger bandwidth (for example, 240 MHz or 320 MHz) that is greater than 160 MHz is considered.

As bandwidth and a quantity of streams increase, a data transmission rate also increases. Therefore, in a next-generation standard, a larger bandwidth (for example, 240 MHz or 320 MHz) and a larger quantity of streams (for example, 9 to 16 spatial streams) are considered.

The spatial stream may also be referred to as a space-time stream, or referred to as a stream for short. In this application, terms "spatial stream", "space-time stream", and "stream" represent a same meaning.

Usually, the STA performs uplink data transmission after obtaining transmission permission through channel contention, for example, a channel is preempted in an enhanced distributed channel access (enhanced distributed channel access, EDCA) manner. In 802.11ax, a trigger-based and scheduling-based uplink transmission method is introduced.

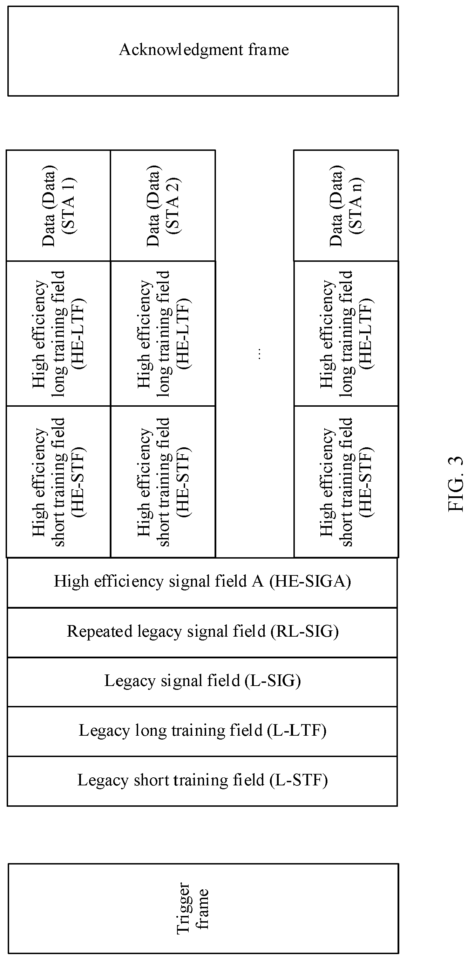

FIG. 3 is a schematic diagram of an uplink transmission process. As shown in FIG. 3, an AP first sends a trigger frame, where the trigger frame includes resource scheduling information and another parameter for one or more stations to send an uplink physical layer protocol data unit (PHY Protocol Data Unit, PPDU).

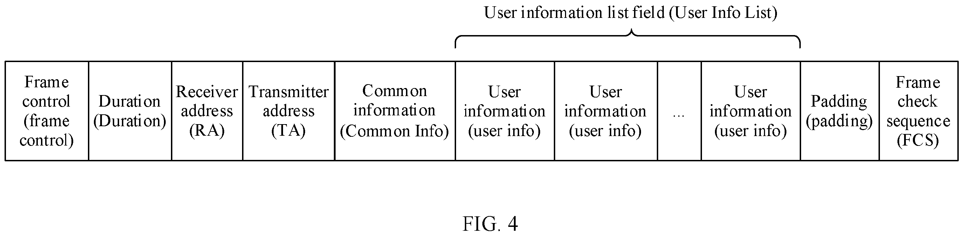

FIG. 4 shows an example of a frame structure of a trigger frame. As shown in FIG. 4, the trigger frame includes a common information (Common Info) field and a user information list (User Info List) field.

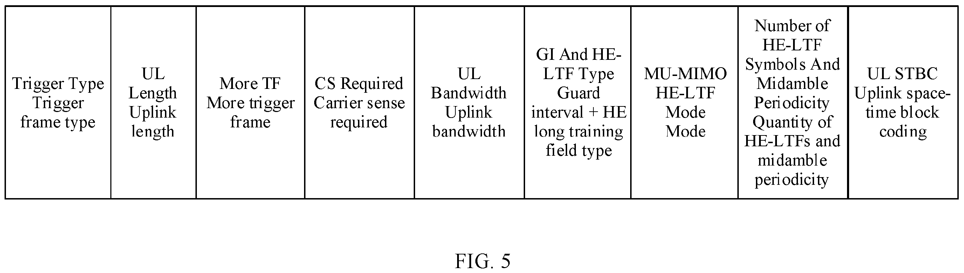

The common information field includes common information that all STAs need to read, and FIG. 5 shows an example of the common information field.

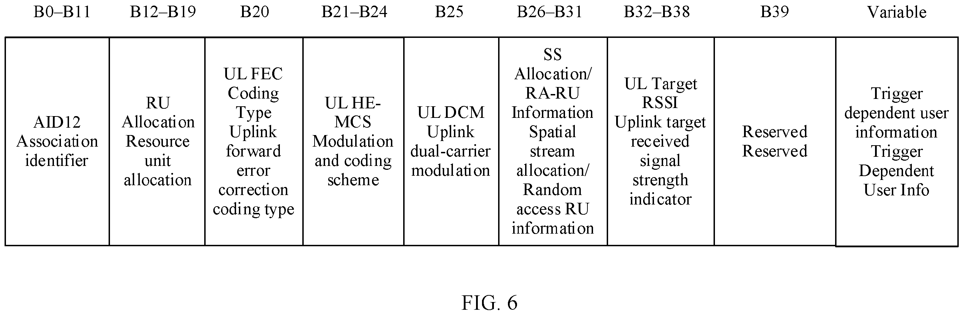

The user information list field includes one or more user information fields, and each user information field includes information that each STA needs to read. In the user information field, an association identifier (Association Identification 12, AID 12) represents an association identifier of a STA, and a resource unit allocation subfield (RU Allocation) indicates a location of a specific resource unit (Resource Unit, RU) allocated to the STA (the STA indicated by the AID 12). FIG. 6 shows an example of a user information field.

After receiving the trigger frame, the STA parses out, from the trigger frame, a user information field that matches an AID of the STA, and then sends a high efficiency trigger-based PPDU on an RU indicated by a resource unit allocation subfield in the user information field. Names and simple functions of fields of the PPDU are shown in the following Table 5.

**Table 5**

| Acronyms and Abbreviations | Short for | Item | Description |
|---|---|---|---|
| L-STF | Legacy Short Training Field | Legacy short training field | Performs PPDU discovery, coarse synchronization, and automatic gain control |
| L-LTF | Legacy Long Training Field | Legacy long training field | Performs fine synchronization and channel estimation |
| L-SIG | Legacy Signal Field A | Legacy signal field | Carries signaling information related to a PPDU length, to ensure coexistence |
| HE-SIGA | High Efficient Signal Field A | High efficiency signal field A | Carries signaling used to demodulate subsequent data |
| HE-STF | High Efficient Short Training Field | High efficiency short training field | Performs automatic gain control of a subsequent field |
| HE-LTF | High Efficient Long Training Field | High efficiency long training field | Estimates a channel |
| Data | | Data | Carries data information |

From the HE-STF to the Data, an entire bandwidth may be divided into one or more resource units. It should be noted that in the 802.11ax standard, only one RU can be allocated to one STA. The next-generation 802.11be standard allows allocation of a plurality of RUs to one STA.

After receiving an uplink multi-user PPDU including uplink sub-PPDUs sent by one or more stations, the AP replies with an acknowledgment frame. The acknowledgment frame sent to the one or more stations may be sent in a downlink orthogonal frequency division multiple access (Orthogonal Frequency Division Multiple Access, OFDMA) form, or may be sent in a non-HT duplicate transmission form. The acknowledgment frame further includes an acknowledgment (Ack) frame and a block acknowledgment (Block Ack) frame, where the Block Ack frame includes a compressed Block Ack frame and a multi-station (Multi-STA) Block Ack frame. The Ack frame and the Block Ack frame are acknowledgments of information sent to one station, and the Multi-STA Block Ack is acknowledgments of information sent to one or more stations.

The following describes in detail the resource unit allocation subfield in the user information field in the trigger frame. The subfield is located in the user information field in the trigger frame. Trigger-based uplink multi-user transmission uses same subcarrier distribution as downlink transmission. By way of example rather than limitation, for example, if the bandwidth is 160 MHz, one bit (B12 bit of the user information field) is first used to indicate a low frequency band 80 MHz or a high frequency band 80 MHz (in a case in which the bandwidth is less than or equal to 80 MHz, the bit is set to 0 by default to indicate a low frequency band 80 MHz), and then all possible cases of resource unit allocation in an 80 MHz is listed in the following Table 6. Then, an index (or an index value or index information) in the table is used for indication.

**Table 6**

| RU Allocation subfield | Uplink bandwidth subfield | Resource block size | RU index |
|---|---|---|---|
| | UL BW subfield | RU size | RU index |
| 0-8 | 20 MHz/40 MHz/80 MHz/80+80 MHz/160 MHz/240 MHz or 320 MHz | 26-tone | RU1 to RU9, respectively |
| 9-17 | 40 MHz/80 MHz/80+80 MHz/160 MHz/240 MHz or 320 MHz | | RU10 to RU18, respectively |
| 18-36 | 80 MHz/80+80 MHz/160 MHz/240 MHz or 320 MHz | | RU19 to RU37, respectively |
| 37-40 | 20 MHz/40 MHz/80 MHz/80+80 MHz/160 MHz/240 MHz or 320 MHz | 52-tone | RU1 to RU4, respectively |
| 41-44 | 40 MHz/80 MHz/80+80 MHz/160 MHz/240 MHz or 320 MHz | | RU5 to RU8, respectively |
| 45-52 | 80 MHz/80+80 MHz/160 MHz/240 MHz or 320 MHz | | RU9 to RU16, respectively |
| 53-54 | 20 MHz/40 MHz/80 MHz/80+80 MHz/160 MHz/240 MHz or 320 MHz | 106-tone | RU1 to RU2, respectively |
| 55-56 | 40 MHz/80 MHz/80+80 MHz/160 MHz/240 MHz or 320 MHz | | RU3 to RU4, respectively |
| 57-60 | 80 MHz/80+80 MHz/160 MHz/240 MHz or 320 MHz | | RU5 to RU8, respectively |
| 61 | 20 MHz/40 MHz/80 MHz/80+80 MHz/160 MHz/240 MHz or 320 MHz | 242-tone | RU1 |
| 62 | 40 MHz/80 MHz/80+80 MHz/160 MHz/240 MHz or 320 MHz | | RU2 |
| 63-64 | 80 MHz/80+80 MHz/160 MHz/240 MHz or 320 MHz | | RU3 to RU4, respectively |
| 65 | 40 MHz/80 MHz/80+80 MHz/160 MHz/240 MHz or 320 MHz | 484-tone | RU1 |
| 66 | 80 MHz/80+80 MHz/160 MHz/240 MHz or 320 MHz | | RU2 |
| 67 | 80 MHz/80+80 MHz/160 MHz/240 MHz or 320 MHz | 996-tone | RU1 |
| 68 | 80+80 MHz/160 MHz/240 MHz or 320 MHz | 2×996-tone | The index value 68 indicates an RU1, including two 996-tone RUs, where each RU occupies half of the PPDU bandwidth |
| Others | | | Reserved |

It should be understood that the foregoing enumerated case in which the maximum uplink bandwidth is 160 MHz is merely an example for description, and the implementations of this application are not limited thereto. For example, the maximum uplink bandwidth may further reach, for example, 240 MHz, 320 MHz, or even higher.

In addition, for example, if the maximum uplink bandwidth reaches 320 MHz, one additional bit may be added to the RU Allocation subfield based on Table 6 for extended indication, by the RU Allocation subfield, of a location of a selected 80 MHz in the 320 MHz bandwidth.

A 0^{th} bit (B0) in the resource unit allocation subfield (RU Allocation subfield) indicates a primary 80 MHz or a secondary 80 MHz. When the bandwidth is 20/40/80 MHz, the bit is indicated as 0 (in primary 80 MHz) by default.

When the bandwidth increases to 320 MHz, one bit (or one bit) is added to the resource unit allocation subfield, the 0^{th} bit and the 1^{st} bit in the existing resource unit allocation subfield are combined to indicate a specific 80 MHz in the 320 MHz bandwidth, and based on the determined location of the 80 MHz, a specific RU is indicated by using a 7-bit table. The resource unit allocation subfield indicates a primary 160 MHz or a secondary 160 MHz.

As shown in FIG. 6, when random access is not involved (that is, when AID12 is not equal to 0 and 2045), B26 to B31 in the user information field are a spatial stream allocation subfield (SS Allocation subfield), indicating a starting location and a quantity of spatial streams allocated to the STA corresponding to the user information field.

Implementations of this application are applicable to a communication system having one or more of the following features:
(1) A maximum of 16 streams are supported in a multi-user multiple input multiple output (Multiple User Multiple Input Multiple Output, MU-MIMO) mode. That is, a maximum sum of streams of all users in a MU-MIMO mode is 16.
(2) A maximum of 16 streams are supported in a non-multi-user multiple input multiple output (Non Multiple User Multiple Input Multiple Output, non-MU-MIMO) mode. That is, a maximum of 16 streams are supported for a user in a non-MU-MIMO mode.
(3) A maximum quantity of spatial streams for each user is 4 in an MU-MIMO mode.
(4) A maximum quantity of users supported by each resource unit group is 8 in an MU-MIMO mode. One resource unit group includes at least one RU. When the resource unit group includes one RU, the resource unit group may also be understood as a resource unit. When the resource unit group includes two or more RUs, the resource unit group may be understood as a multiple resource unit (Multiple Resource allocation, MRU).
(5) MU-MIMO can be used only on a resource unit group greater than or equal to 242, or in other words, an MU-MIMO mode can be used only when a quantity of subcarriers included in the resource unit group is greater than or equal to 242.

### Implementation 1

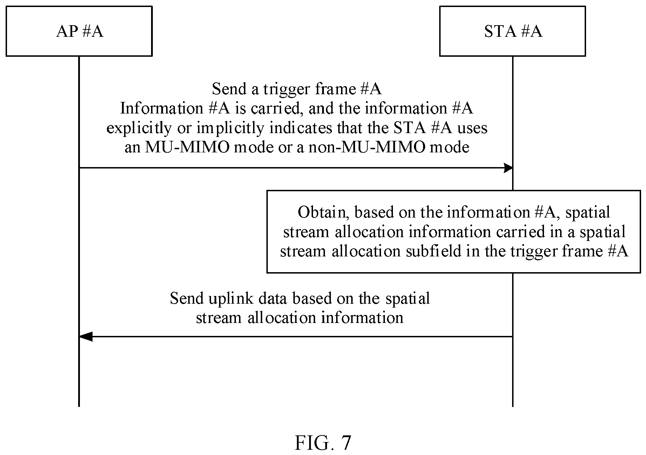

FIG. 7 shows a schematic diagram of an example of interaction in a spatial stream indication process according to an implementation of this application.

As shown in FIG. 7, an AP generates a trigger frame #A. The trigger frame #A includes a user information field of at least one STA. Structures of user information fields of the at least one STA are similar, and operations performed by the at least one STA based on the trigger frame are similar. Herein, for ease of understanding, a processing process of a STA #A (that is, the example of the first STA in the first aspect) is used as an example for description.

To be specific, the trigger frame #A includes a user information field (denoted as a user information field #A, that is, the example of the first user information field) of the STA #A.

In this implementation of this application, the user information field #A carries information #A (that is, the example of the first information).

The information #A indicates a MIMO mode (denoted as a mode #A for ease of understanding and differentiation) used by the STA #A to transmit data, that is, the mode #A is an MU-MIMO mode or a non-MU-MIMO mode.

In this implementation of this application, information carried in a spatial stream allocation subfield (SS Allocation subfield) of the user information field #A (for example, a quantity of bits occupied by the information or a manner of interpreting the information) varies with different transmission modes indicated in the information #A (or different modes used by the STA #A to transmit data).

The following separately describes in detail structures of an SS Allocation subfield in an MU-MIMO mode and an SS Allocation subfield in a non-MU-MIMO mode.

### 1. MU-MIMO mode

In a case in which a maximum of 16 streams are supported in an MU-MIMO mode, there are 16 possible starting locations of a stream (which may also be referred to as a spatial stream or a space-time stream) allocated to a STA (for example, the STA #A). Therefore, 4 bits are needed to indicate the starting location of the stream of the STA (for example, the STA #A).

In a case in which a maximum quantity of spatial streams of each user in an MU-MIMO mode is 4, there are four possible quantities of streams allocated to a STA (for example, the STA #A). Therefore, 2 bits are needed to indicate the quantity of streams of the STA (for example, the STA #A).

That is, in an MU-MIMO mode, the SS Allocation subfield includes at least 6 bits (for example, B26 to B31 in FIG. 6), where 4 bits are used to carry spatial starting stream location information, to indicate a starting location of a spatial stream allocated to the STA, and the other 2 bits are used to carry spatial stream quantity information, to indicate a quantity of spatial streams allocated to the STA.

It should be noted that locations of the spatial starting stream location information and the spatial stream quantity information in the SS Allocation subfield may use different structures according to a requirement, provided that the AP and the STA have consistent understanding of the information carried in the SS Allocation subfield.

That is, in an MU-MIMO mode, spatial stream allocation information of the STA #A includes the spatial starting stream location information and the spatial stream quantity information, where the spatial starting stream location information occupies 4 bits, and the spatial stream quantity information occupies 2 bits.

### 2. Non-MU-MIMO mode

In a non-MU-MIMO mode, a spatial stream indicated in information carried in the SS Allocation subfield is allocated to a STA (for example, the STA #A), and a starting location of the spatial stream allocated to the STA may be 1 by default. Therefore, the starting location of the spatial stream allocated to the STA does not need to be indicated.

In addition, in a case in which a maximum of 16 streams are supported in a non-MU-MIMO mode, there are 16 possible quantities of streams of allocated to a STA (for example, the STA #A). Therefore, 4 bits are needed to indicate a quantity of streams of the STA (for example, the STA #A).

That is, in a non-MU-MIMO mode, the SS Allocation subfield includes at least 4 bits, used to carry spatial stream quantity information, to indicate a quantity of spatial streams allocated to the STA.

That is, in a non-MU-MIMO mode, spatial stream allocation information of the STA #A includes the spatial stream quantity information, and the spatial stream quantity information occupies 4 bits.

In an implementation, the SS Allocation subfield includes 6 bits (for example, B26 to B31 in FIG. 6), but the spatial stream allocation information of the STA #A occupies only 4 of the 6 bits, and the other 2 bits may be used to indicate other information.

It should be noted that, in this case, a location of the spatial stream allocation information (specifically, the spatial stream quantity information) in the SS Allocation subfield may vary, provided that the AP and the STA have consistent understanding of the information carried in the SS Allocation subfield.

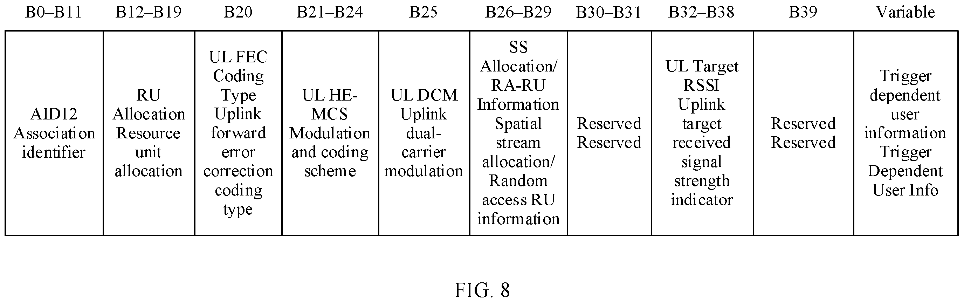

In another implementation, the SS Allocation subfield includes 4 bits (for example, B26 to B29 in FIG. 8). In this implementation, 2 bits (for example, B30 to B31 in FIG. 8) may be saved. The 2 bits may be used to carry other information, for example, may be used as a reserved subfield.

In addition, as shown above, the SS Allocation subfield (specifically, a quantity of bits included in the SS Allocation subfield) in an MU-MIMO mode may be different from that in a non-MU-MIMO mode. In this case, locations of the SS Allocation subfield in the user information field in an MU-MIMO mode and that in a non-MU-MIMO mode may overlap or may be different. This is not particularly limited in this implementation of this application, provided that the STA and the AP have consistent understanding (or interpretation) of the user information field and the SS Allocation subfield in an MU-MIMO mode and a non-MU-MIMO mode.

In this implementation of this application, the information #A may indicate the mode #A in an explicit indication manner or an implicit indication manner.

### Implementation 2

In this implementation, a process of explicitly indicating the mode #A is described.

In this implementation of this application, the information #A includes 1 bit, or the information #A occupies 1 bit.

For example, when a value of the bit corresponding to the information #A is "1", the information #A indicates that the STA #A transmits data in an MU-MIMO mode. When the value of the bit corresponding to the information #A is "0", the information #A indicates that the STA #A transmits data in a non-MU-MIMO mode.

Alternatively, when the value of the bit corresponding to the information #A is "0", the information #A indicates that the STA #A transmits data in an MU-MIMO mode. When the value of the bit corresponding to the information #A is "1", the information #A indicates that the STA #A transmits data in a non-MU-MIMO mode.

It should be understood that the foregoing enumerated relationship between the value of the information #A and the indicated content is merely an example for description. This is not particularly limited in this implementation of this application, provided that the AP and the STA have consistent understanding of the content indicated by the different values of the information #A. For example, the relationship between the value of the information #A and the indicated content may be specified by a communication system or a communication protocol, or the relationship between the value of the information #A and the indicated content may be indicated by the AP to the STA.

In the second possible case of the mode #A, only 1 bit is needed to meet the requirement, so that bit overheads can be resolved, and practicability of this application can be further improved. However, this implementation of this application is not limited thereto, and the information #A may also occupy two or more bits.

The following describes a bearer location of the information #A in the user information field.

### Manner 1

In an implementation, the information #A is carried in a reserved subfield in a user information field, for example, B39 shown in FIG. 6.

In this case, the STA #A may obtain the information #A from the reserved subfield in the user information field #A, that is, B39 in the user information field #A.

### Manner 2

In another implementation, information carried in an uplink dual-carrier modulation subfield shown in FIG. 6 may be carried by using a modulation and coding scheme subfield. In addition, the method may be similar to a method and a process in a conventional technology in which a coding scheme subfield carries uplink dual-carrier modulation information. To avoid repetition, detailed description thereof is omitted herein.

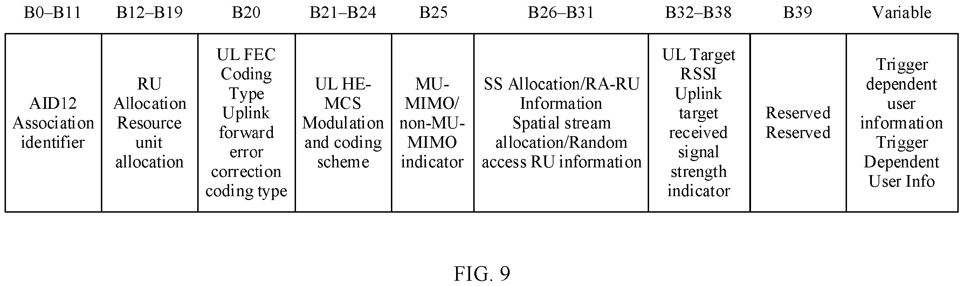

Therefore, in this application, the trigger frame #A may not include the uplink dual-carrier modulation subfield , so that a saved bit (for example, B25) may be used as a field to carry the information #A, for example, an MU-MIMO/non-MU-MIMO indicator subfield shown in FIG. 9.

It should be noted that, when a bit is saved because the trigger frame does not include some subfields (for example, the uplink dual-carrier modulation subfield ) in a conventional technology, locations of some subfields in the trigger frame may change in the trigger frame, that is, may differ from locations of the subfields in the trigger frame in the conventional technology. Alternatively, locations of some subfields in the trigger frame may not change in the trigger frame, that is, are the same as locations of the subfields in the trigger frame in the conventional technology. In other words, a location at which the saved bit is placed in the trigger frame is not particularly limited in this implementation of this application. To avoid repetition, descriptions of a same or similar case are omitted below.

In this case, the STA #A may obtain the information #A from the bit, for example, B25 in the user information field #A, saved by excluding the uplink dual-carrier modulation subfield in the user information field #A.

### Manner 3

The user information field shown in FIG. 6 includes a resource unit allocation subfield (RU Allocation subfield), that is, B12 to B19 in the user information field. The RU Allocation subfield is used to carry a resource unit group allocated to the STA, for example, an RU or an MRU.

In addition, as shown in FIG. 6, the user information field includes an uplink forward error correction coding type subfield, that is, B20 in the user information field. The subfield is used to carry coding scheme information, and the coding scheme information may indicate a coding scheme of uplink transmission, for example, a binary convolutional coding (binary convolutional coding, BCC) manner or a low-density parity-check code (Low Density Parity Check Code, LDPC) manner.

In addition, the coding scheme needs to be indicated only when a quantity of subcarriers included in the resource unit group allocated to the STA is less than or equal to a specific threshold (denoted as a threshold #A, that is, the example of the first threshold).

By way of example rather than limitation, a value of the threshold #A is 242.

It should be noted that the threshold #A may be specified by a communication system or a communication protocol. This is not particularly limited in this implementation of this application.

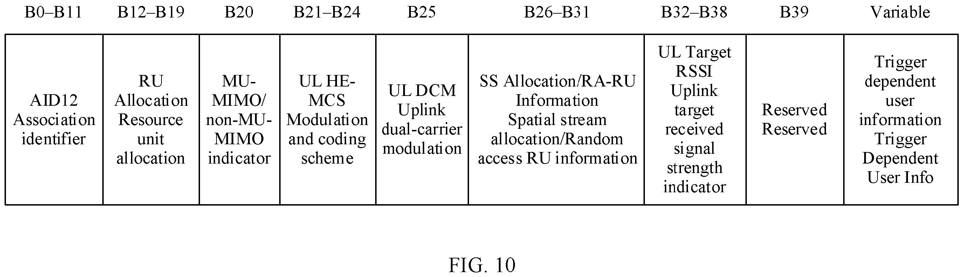

For example, if a quantity of subcarriers included in a resource unit group allocated to the STA #A (or a resource unit group indicated by information carried in the RU Allocation subfield of the user information field #A) is greater than the threshold #A, it indicates that a coding scheme does not need to be indicated. In other words, as shown in FIG. 10, the user information field #A may not include an uplink forward error correction coding type subfield.

Therefore, a saved bit (for example, B20) may be used as a field to carry the information #A, for example, an MU-MIMO/non-MU-MIMO indicator subfield shown in FIG. 10.

It should be noted that, when a bit is saved because the trigger frame does not include some subfields (for example, the uplink forward error correction coding type subfield) in a conventional technology, locations of some subfields in the trigger frame may change in the trigger frame, that is, may differ from locations of the subfields in the trigger frame in the conventional technology. Alternatively, locations of some subfields in the trigger frame may not change in the trigger frame, that is, are the same as locations of the subfields in the trigger frame in the conventional technology. In other words, a location at which the saved bit is placed in the trigger frame is not particularly limited in this implementation of this application. To avoid repetition, descriptions of a same or similar case are omitted below.

In this case, the STA #A may obtain the information #A from the bit, for example, B20 in the user information field #A, saved by excluding the uplink forward error correction coding type subfield in the user information field #A.

In addition, although this implementation of this application provides that the information #A is indicated by using 1 bit saved by excluding the UL FEC Coding Type subfield, this implementation of this application is not limited thereto. The saved 1 bit may be further used to indicate other information. For example, when an 8-bit RU Allocation subfield indicates an RU greater than 242, the 1 bit may be used to extend the RU Allocation subfield table, or may be used to indicate an MRU combination.

### Implementation 3

In this implementation, a process of implicitly indicating the mode #A is described.

The user information field shown in FIG. 6 includes a resource unit allocation subfield (RU Allocation subfield), that is, B12 to B19 in the user information field. The RU Allocation subfield is used to carry a resource unit group allocated to the STA, for example, an RU or an MRU.

In addition, an MU-MIMO mode can be used only when a quantity of subcarriers included in the resource unit group allocated to the STA is greater than a specific threshold (denoted as a threshold #B, that is, the example of the second threshold).

By way of example rather than limitation, a value of the threshold #B is 242 or 484.

It should be noted that the threshold #B may be specified by a communication system or a communication protocol. This is not particularly limited in this implementation of this application.

For example, if a quantity of subcarriers included in a resource unit group allocated to the STA #A (or a resource unit group indicated by information carried in the RU Allocation subfield of the user information field #A) is less than the threshold #B, it indicates that the STA #A cannot use an MU-MIMO mode, that is, the mode #A is a non-MU-MIMO mode by default.

In this case, when the STA #A determines that a quantity of subcarriers included in an RU or MRU indicated by the RU Allocation subfield in the user information field #A is less than the threshold #B, the mode indicated by the information #A is a non-MU-MIMO mode by default.

It should be noted that the threshold #A and the threshold #B may be used together or separately. This is not particularly limited in this implementation of this application.

When the quantity of subcarriers included in the RU or MRU indicated by the RU Allocation subfield in the user information field #A is greater than the threshold #B for using an MU-MIMO mode, it may be further indicated/determined that an MU-MIMO mode or a non-MU-MIMO mode is used on the RU or MRU. For example, the indication function of the information #A may be implemented in any one of the foregoing manners 1 to 3.

In addition, when the quantity of subcarriers included in the RU or MRU indicated by the RU Allocation subfield in the user information field #A is equal to the threshold #B for using an MU-MIMO mode, it may be further indicated/determined that an MU-MIMO mode or a non-MU-MIMO mode is used on the RU or MRU. In addition, when the threshold #A is equal to the threshold #B, for example, both are 242, the uplink forward error correction coding type field of the user information field #A needs to carry the coding scheme information, that is, the foregoing manner 3 cannot be used.

In this case, in addition to implementing the indication function of the information #A in the foregoing manner 1 or manner 2, an implementation of this application may further provide the following manner of implementing the indication function of the information #A.

### Manner x

Four entries corresponding to a 242-tone may be additionally added to the 7-bit 80 MHz specific indication (refer to Table 6) of the RU Allocation subfield, and there are a total of eight entries including the original four entries corresponding to a 242-tone. It is set that four entries correspond to an MU-MIMO transmission mode, and the other four entries correspond to a non-MU-MIMO transmission mode. By selecting different entries, a STA to which a 242-tone RU is allocated can be notified of whether MU-MIMO or non-MU-MIMO is used. In this manner x, when the value of the threshold #A is equal to the value of the threshold #B (for example, both are 242), and a size of an allocated resource block is equal to the threshold, a smaller quantity of communication resources may be used to indicate an MU-MIMO/non-MU-MIMO transmission mode.

The following Table 7 shows an example of a correspondence of between an index value and a case of allocation of a 242-tone RU.

**Table 7**

| RU Allocation subfield | MIMO mode | UL BW size | RU size | RU index |
|---|---|---|---|---|
| 61 | MU-MIMO | 20 MHz/40 MHz/80 MHz/80+80 MHz/160 MHz/240 MHz or 320 MHz | 242-tone | RU1 |
| | | | 242-tone | |
| 62 | MU-MIMO | 40 MHz/80 MHz/80+80 MHz/160 MHz/240 MHz or 320 MHz | | RU2 |
| 63-64 | MU-MIMO | 80 MHz/80+80 MHz/160 MHz/240 MHz or 320 MHz | | RU3 to RU4, respectively |
| 69 | non-MLT-MIMO | 20 MHz/40 MHz/80 MHz/80+80 MHz/160 MHz/240 MHz or 320 MHz | 242-tone | RU1 |
| 70 | non-MLT-MIMO | 40 MHz/80 MHz/ 80+80 MHz/160 MHz/240 MHz or 320 MHz | | RU2 |
| 71-72 | non-MLT-MIMO | 80 MHz/80+80 MHz/160 MHz/240 MHz or 320 MHz | | RU3 to RU4, respectively |

The entries corresponding to the index values 61 to 64 in Table 6 may be reused for entries corresponding to index values 61 to 64, that is, a MIMO mode corresponding to the entry, for example, MU-MIMO, is added to the entries corresponding to the index values 61 to 64 in Table 6.

Entries corresponding to index values 69 to 72 may be newly added entries.

### Manner y

When the value of the threshold #A is equal to the value of the threshold #B, for example, both are 242, four entries corresponding to the 242-tone may be additionally added to the 7-bit 80 MHz specific indication of the RU Allocation subfield, and there are a total of eight entries including the original four entries corresponding to a 242-tone. It is set that four entries correspond to a BCC coding scheme, and the other four entries correspond to an LDPC coding scheme. By selecting different entries, a user to which a 242-tone RU is allocated can be informed of whether to use a BCC coding scheme or an LDPC coding scheme. In this manner y, when the value of the threshold #A is equal to the value of the threshold #B (for example, both are 242), and a size of an allocated resource block is equal to the threshold, whether a BCC coding scheme or an LDPC coding scheme is used can be indicated by using a smaller quantity of communication resources.

Specifically, in this case, the user information field #A may not include an uplink forward error correction coding type (UL FEC Coding Type) subfield. Therefore, as shown in FIG. 10, a saved bit (for example, B20) may be used to carry the information #A.

It should be noted that, when a bit is saved because the trigger frame does not include some subfields (for example, the uplink forward error correction coding type subfield) in a conventional technology, locations of some subfields in the trigger frame may change in the trigger frame, that is, may differ from locations of the subfields in the trigger frame in the conventional technology. Alternatively, locations of some subfields in the trigger frame may not change in the trigger frame, that is, are the same as locations of the subfields in the trigger frame in the conventional technology. In other words, a location at which the saved bit is placed in the trigger frame is not particularly limited in this implementation of this application. To avoid repetition, descriptions of a same or similar case are omitted below.

In this case, the STA #A may obtain the information #A from the bit, for example, B20 in the user information field #A, saved by excluding the uplink forward error correction coding type subfield in the user information field #A.

In addition, although this implementation of this application provides that the information #A is indicated by using 1 bit saved by excluding the UL FEC Coding Type subfield, this implementation of this application is not limited thereto. The saved 1 bit may be further used to indicate other information. For example, when an 8-bit RU Allocation subfield indicates an RU greater than 242, the 1 bit may be used to extend the RU Allocation subfield table, or may be used to indicate an MRU combination.

The following Table 8 shows another example of a correspondence of between an index value and a case of allocation of a 242-tone RU.

**Table 8**

| RU Allocation subfield | UL FEC Coding Type subfield | UL BW size | RU size | RU index |
|---|---|---|---|---|
| 61 | BCC | 20 MHz/40 MHz/80 MHz/80+80 MHz/160 MHz/240 MHz or 320 MHz | 242-tone | RU1 |
| 62 | BCC | 40 MHz/80 MHz/ 80+80 MHz/160 MHz/240 MHz or 320 MHz | | RU2 |
| 63-64 | BCC | 80 MHz/80+80 MHz/ 160 MHz/240 MHz or 320 MHz | | RU3 to RU4, respectively |
| 69 | LDPC | 20 MHz/40 MHz/80 MHz/80+80 MHz/160 MHz/240 MHz or 320 MHz | 242-tone | RU1 |
| 70 | LDPC | 40 MHz/80 MHz/80+80 MHz/160 MHz/240 MHz or 320 MHz | | RU2 |
| 71-72 | LDPC | 80 MHz/80+80 MHz/160 MHz/240 MHz or 320 MHz | | RU3 to RU4, respectively |

The entries corresponding to the index values 61 to 64 in Table 6 may be reused for entries corresponding to index values 61 to 64, that is, a coding scheme corresponding to the entry, for example, BCC, is added to the existing entries corresponding to the index values 61 to 64.

Entries corresponding to index values 69 to 72 may be newly added entries.

In addition, the user information field shown in FIG. 6, and FIG. 8 to FIG. 10 includes a resource unit allocation subfield (RU Allocation subfield), that is, B12 to B19 in the user information field. The RU Allocation subfield is used to carry a resource unit group allocated to the STA, for example, an RU or an MRU.

In addition, when a bandwidth indicated by an uplink bandwidth subfield (as shown in FIG. 5) in the common information field of the trigger frame is greater than 160 MHz, the RU Allocation subfield needs 9 bits to complete indication.

In addition, when the uplink bandwidth indicated by the uplink bandwidth subfield is greater than 160 MHz, the threshold #B may be 484.

That is, it is assumed that the threshold #A=242, and the threshold #B=484.

In this case, if the bandwidth indicated by the uplink bandwidth subfield in the common information field of the trigger frame #A is greater than 160 MHz, and the quantity of subcarriers included in the resource unit group allocated to the STA #A is less than or equal to 242, the uplink forward error correction coding type subfield may be reserved, and the information #A may be sent in the foregoing manner 1 or manner 2.

If the bandwidth indicated by the uplink bandwidth subfield in the common information field of the trigger frame #A is greater than 160 MHz, and the quantity of subcarriers included in the resource unit group allocated to the STA #A is greater than the threshold #A of 242, it indicates that a coding scheme does not need to be indicated. In other words, as shown in FIG. 10, the user information field #A may not include an uplink forward error correction coding type subfield. Therefore, a saved bit (for example, B20) may be used to carry the information #A.

If the bandwidth indicated by the uplink bandwidth subfield in the common information field of the trigger frame #A is less than or equal to 160 MHz, an additional bit based on Table 6 does not need to be used to extend the RU Allocation subfield to indicate 320 MHz. In addition, the information #A may be sent in the foregoing manner 1 or manner 2.

In conclusion, when an MU-MIMO mode requires a corresponding threshold (that is, the threshold #B) of 242:
If a quantity of subcarriers included in an RU/MRU indicated by the RU Allocation subfield is greater than 242, whether an MU-MIMO mode or a non-MU-MIMO mode is used needs to be indicated in an explicit manner. That is, in this case, indication information (that is, the information #A) of an MU-MIMO mode or a non-MU-MIMO mode may be sent in any one of the manner 1, the manner 2, or the manner 3 in the foregoing implementation 2.

If a quantity of subcarriers included in an RU/MRU indicated by the RU Allocation subfield is less than 242, a non-MU-MIMO mode may be used by default in an implicit manner. That is, in this case, the non-MU-MIMO mode may be implicitly indicated in the foregoing implementation 3.

If a quantity of subcarriers included in an RU/MRU indicated by the RU Allocation subfield is equal to 242, whether an MU-MIMO mode or a non-MU-MIMO mode is used needs to be indicated in an explicit manner. In addition, if a coding scheme requires a corresponding threshold (that is, the threshold #A) of 242, the coding scheme further needs to be indicated. In this case, indication information (that is, the information #A) of an MU-MIMO mode or a non-MU-MIMO mode and coding scheme information may be sent in the manner x or the manner y.

When an MU-MIMO mode requires a corresponding threshold (that is, the threshold #B) of 484:
If a quantity of subcarriers included in an RU/MRU indicated by the RU Allocation subfield is greater than or equal to 484, whether an MU-MIMO mode or a non-MU-MIMO mode is used needs to be indicated in an explicit manner. That is, in this case, indication information (that is, the information #A) of an MU-MIMO mode or a non-MU-MIMO mode may be sent in any one of the manner 1, the manner 2, or the manner 3 in the foregoing implementation 2.

If a quantity of subcarriers included in an RU/MRU indicated by the RU Allocation subfield is less than 484, a non-MU-MIMO mode may be used by default in an implicit manner. That is, in this case, the non-MU-MIMO mode may be implicitly indicated in the foregoing implementation 3.

### Implementation 4

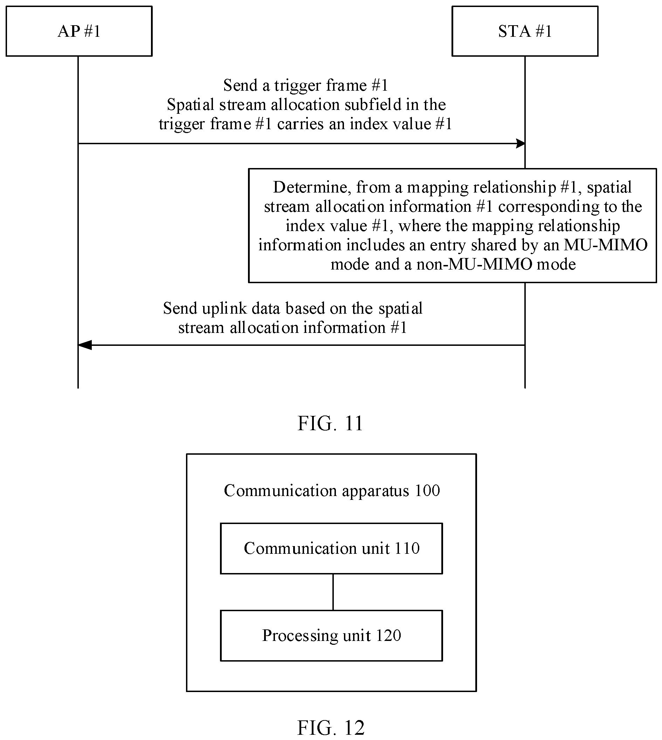

FIG. 11 shows a schematic diagram of an example of interaction in a spatial stream indication process according to an implementation of this application.

As shown in FIG. 11, an AP generates a trigger frame #1. The trigger frame #1 includes a user information field of at least one STA. Structures of user information fields of the at least one STA are similar, and operations performed by the at least one STA based on the trigger frame are similar. Herein, for ease of understanding, a processing process of a STA #1 (that is, the example of the first STA in the second aspect) is used as an example for description.

To be specific, the trigger frame #1 includes a user information field (denoted as a user information field #1, that is, the example of the first user information field) of the STA #1.

In this implementation of this application, a mapping relationship #1 (that is, the example of the first mapping relationship in the third aspect) is configured on the AP and the STA. The mapping relationship #1 includes a correspondence between a plurality of pieces of spatial stream allocation information and a plurality of index values. In this implementation of this application, the index value may include 6 bits. Different from another implementation, the spatial stream allocation information no longer separately indicates the stream quantity information and the starting stream location information, but uses a manner of indexing the stream quantity information and the starting stream location information as a whole.

In addition, the user information field #1 includes a spatial stream allocation subfield (SS Allocation subfield), information carried in the SS Allocation subfield is used to carry an index value (denoted as an index value #1) corresponding to spatial stream configuration information #1, and the spatial stream configuration information #1 indicates information about a spatial stream #1 allocated to the STA #1, that is, a starting location of the spatial stream #1, and a quantity of the spatial streams #1. The SS Allocation subfield may include 6 bits.

In an implementation of this application, the mapping relationship #1 includes an entry shared by an MU-MIMO mode and a non-MU-MIMO mode, an entry exclusive to an MU-MIMO mode, and an entry exclusive to a non-MU-MIMO mode. Correspondingly, an index (entry) exclusive to the MU-MIMO mode also indicates that the transmission is in an MU-MIMO mode, and an index (entry) exclusive to a non-MU-MIMO mode also indicates that the transmission is in a non-MU-MIMO mode. In a case of a shared entry, this implementation may combine the foregoing solutions for indicating an MU-MIMO mode and a non-MU-MIMO mode, or may not use the foregoing technical solutions.

Specifically, a WLAN in this implementation of this application meets the following conditions:
(1) A maximum of 8 or 16 spatial streams are supported in an MU-MIMO mode.
(2) A maximum of 16 streams are supported in a non-MU-MIMO mode.
(3) A maximum quantity of spatial streams for each user is 4 in an MU-MIMO mode.
(4) A maximum quantity of users supported by each resource unit group is 8 in an MU-MIMO mode.

Therefore, an MU-MIMO mode and a non-MU-MIMO mode may share entries in which spatial stream configuration information indicates that a starting stream location is 1 and a quantity of streams is 1 to 4, for example, entries corresponding to index values 1 to 4 in the following Table 9 to Table 11, that is, the first row in Table 9 to Table 11.

That is, when a maximum quantity of spatial streams supported by non-MU-MIMO is 8, an MU-MIMO mode and a non-MU-MIMO mode may share entries in which spatial stream configuration information indicates that a starting stream location is 1 and a quantity of streams is 1 to 4, for example, entries corresponding to index values 1 to 4 in the following Tables 9 to Table 11, that is, the first row in Tables 9 to Table 11. Therefore, only four additional entries are needed to indicate indication of non-MU-MIMO in which a starting stream is 1 and a quantity of streams is 5 to 8. In this case, a quantity of bits of the spatial stream allocation subfield is 6 bits.

In a possible implementation, a total quantity of streams cannot be greater than 16, for example, a quantity of streams of the STA cannot be greater than 1 when the starting stream is the sixteenth stream. Otherwise, the total quantity of streams exceeds 16. Therefore, the mapping relationship #1 may not include the entry. The following Table 9 shows an example of the mapping relationship #1 in an implementation of this application.

**Table 9**

| SS Allocation subfield | Spatial stream allocation information | | Usage |
|---|---|---|---|
| | Quantity of streams | Starting stream location | |
| 0-3 | 1-4 | 1 | Shared |
| 4-7 | 1-4 | 2 | Exclusive to an MU-MIMO mode |
| 8-11 | 1-4 | 3 | |
| 12-15 | 1-4 | 4 | |
| 16-19 | 1-4 | 5 | |
| 20-23 | 1-4 | 6 | |
| 24-27 | 1-4 | 7 | Exclusive to an MU-MIMO mode |
| 28-31 | 1-4 | 8 | |
| 32-35 | 1-4 | 9 | |
| 36-39 | 1-4 | 10 | |
| 40-43 | 1-4 | 11 | |
| 44-47 | 1-4 | 12 | |
| 48-51 | 1-4 | 13 | |
| 52-54 | 1-3 | 14 | |
| 55-56 | 1-2 | 15 | |
| 56 | 1 | 16 | |
| 58-61 | 5-8 | 1 | Exclusive to a non-MU-MIMO mode |
| 62-63 | Reserved | | |

It should be noted that the foregoing table uses a compressed manner for recording. Certainly, another manner for recording may be used. For example, each entry includes only one unique value.

It should be noted that when a maximum quantity of spatial streams supported by non-MU-MIMO is 16, the foregoing table needs to be extended to 7 bits (because 64 index values corresponding to 6 bits are insufficient to indicate 12 additional entries).

The following Table 10 shows an example of the mapping relationship #1 when the maximum quantity of spatial streams supported by non-MU-MIMO is 16.

**Table 10**

| SS Allocation subfield | Spatial stream allocation information | | Usage |
|---|---|---|---|
| | Quantity of streams | Starting stream location | |
| 0-3 | 1-4 | 1 | Shared |
| 4-7 | 1-4 | 2 | Exclusive to an MU-MIMO mode |
| 8-11 | 1-4 | 3 | |
| 12-15 | 1-4 | 4 | |
| 16-19 | 1-4 | 5 | |
| 20-23 | 1-4 | 6 | Exclusive to an MU-MIMO mode |
| 24-27 | 1-4 | 7 | |
| 28-31 | 1-4 | 8 | |
| 32-35 | 1-4 | 9 | |
| 36-39 | 1-4 | 10 | |
| 40-43 | 1-4 | 11 | |
| 44-47 | 1-4 | 12 | |
| 48-51 | 1-4 | 13 | |
| 52-54 | 1-3 | 14 | |
| 55-56 | 1-2 | 15 | |
| 57 | 1 | 16 | |
| 58-69 | 5-16 | 1 | Exclusive to a non-MU-MIMO mode |
| 70-127 | Reserved | | |

In another possible implementation, the trigger frame #1 includes user information fields of at least two STAs, and structures of the user information fields of the at least two STAs are similar. Quantities of streams allocated to the at least two STAs may be sorted, and a STA (user) having a largest quantity of streams should be allocated a stream starting location with a smallest sequence number, and a quantity of streams of the STA is indicated. In this manner, entries exclusive to an MU-MIMO mode can be further compressed.

Specifically, a rule that a user having a largest quantity of streams should be allocated a smallest starting stream location is followed. In other words, in addition to indicating spatial stream allocation information of the STA, the spatial stream allocation subfield in the user information field further indicates a range of spatial streams allocated to another STA, for example, a range of stream quantity.

For example, if a starting location of a stream of a STA-a is the second stream, it indicates that the first stream is allocated to another user. Therefore, according to the foregoing rule, a quantity of streams allocated to the STA-a can only be 1 (cannot be greater than a quantity of streams of the another user).

For another example, if a starting location of a stream of a STA-b 1 is the third stream, it indicates that the first two streams are allocated to another user. Therefore, the two streams may be allocated to a same STA, or may be allocated to different STAs. When the two streams are allocated to a same STA-b2, according to the foregoing rule, a quantity of streams allocated to the STA-b1 may be 2 (cannot be greater than a quantity of streams of the STA-b2). Therefore, a possible value of a quantity of streams in an entry with the third stream as a starting location is 1 or 2.

For another example, if a starting location of a stream of a STA-c1 is the fourth stream, it indicates that the first three streams are allocated to another STA. Therefore, the three streams may be allocated to a same STA, or may be allocated to different STAs. When the three streams are allocated to a same STA-c2, according to the foregoing rule, a quantity of streams allocated to the STA-c 1 may be 3 (cannot be greater than a quantity of streams of the STA-c2). Therefore, a possible value of a quantity of streams in an entry with the fourth stream as a starting location is 1, 2, or 3.

For another example, if a starting location of a stream of a STA-d1 is the fifth stream, it indicates that the first four streams are allocated to another STA. Therefore, the four streams may be allocated to a same STA, or may be allocated to different STAs. When the four streams are allocated to a same STA-d2, according to the foregoing rule, a quantity of streams allocated to the STA-d1 may be 4 (cannot be greater than a quantity of streams of the STA-d2). Therefore, a possible value of a quantity of streams in an entry with the fifth stream as a starting location is 1, 2, 3 or 4.

For another example, if a starting location of a stream of a STA-e1 is the sixth stream, it indicates that the first five streams are allocated to another STA. In addition, as described above, a maximum quantity of streams allocated to a same STA in an MU-MIMO mode is 4, the five streams are not allocated to a same STA. Therefore, possible cases of allocation of the five streams include: α. Three streams are allocated to a STA-e2, and two other streams are allocated to another STA-e3. In this case, according to the foregoing rule, a quantity of streams allocated to the STA-e1 may be 2 (cannot be greater than a quantity of streams of either STA-e2 or STA-e3).

β. Four streams are allocated to a STA-e4, and one other stream is allocated to another STA-e5. In this case, according to the foregoing rule, a quantity of streams allocated to the STA may be 1 (cannot be greater than a quantity of streams of either STA-e4 or STA-e5).

γ. Two streams are allocated to a STA-e6, two other streams are allocated to another STA-e7, and the two other streams are allocated to another STA-e8. In this case, according to the foregoing rule, a quantity of streams allocated to the STA may be 2 (cannot be greater than a quantity of streams of any one of STA-e6, STA-e7, and STA-e8).

ε. Two streams are allocated to a STA-e9, two other streams are allocated to another STA-e 10, one other stream is allocated to another STA-e11, and one other stream is allocated to another STA-e12. In this case, according to the foregoing rule, a quantity of streams allocated to the STA may be 1 (cannot be greater than a quantity of streams of any one of STA-e9 to STA-e12).

It should be understood that the foregoing enumerated cases of allocation are merely examples for description, and the implementations of this application are not limited thereto. The cases of allocation may further include: For example, the five streams may be further allocated to five STAs respectively (that is, one stream is allocated to each STA).

Therefore, a possible value of a quantity of streams in an entry with the fifth stream as a starting location is 1 or 2.

By analogy, the following Table 11 shows another example of the mapping relationship #1.

**Table 11**

| SS Allocation subfield | Spatial stream allocation information | | Usage |
|---|---|---|---|
| | Quantity of streams | Starting stream location | |
| 0-3 | 1-4 | 1 | Shared |
| 4 | 1 | 2 | Exclusive to an MU-MIMO mode |
| 5-6 | 1-2 | 3 | |
| 7-9 | 1-3 | 4 | |
| 10-13 | 1-4 | 5 | |
| 14-15 | 1-2 | 6 | |
| 16-18 | 1-3 | 7 | |
| 19-21 | 1-3 | 8 | |
| 22-25 | 1-4 | 9 | |
| 26-28 | 1-3 | 10 | Exclusive to an MU-MIMO mode |
| 29-31 | 1-3 | 11 | |
| 32-34 | 1-3 | 12 | |
| 35-38 | 1-4 | 13 | |
| 39-41 | 1-3 | 14 | |
| 42-43 | 1-2 | 15 | |
| 44 | 1 | 16 | |
| 45-56 | 5-16 | 1 | Exclusive to a non-MLT-MIMO mode |
| 57-63 | Reserved | | |

In the foregoing solution of the resource allocation rule and the spatial stream allocation information, allocation is efficiently indicated. This facilitates product implementation, and saves storage resources and communication resources.

Therefore, when receiving the trigger frame #1, the STA #1 may determine, from the mapping relationship #1 according to the information carried in the SS Allocation subfield that is used to carry the index value #1, the spatial stream configuration information #1 corresponding to the index value #1, and further determine a starting location and a quantity of spatial stream allocated by the AP to the STA #1.

The mapping relationship indicating the correspondence between an index value and spatial stream allocation information includes spatial stream allocation information shared by an MU-MIMO mode and a non-MU-MIMO mode, so that a quantity of required index values can be reduced. This reduces bit overheads for carrying the index value.

An embodiment of this application provides an apparatus for transmitting a physical layer protocol data unit. In a possible implementation, the apparatus is configured to implement the steps or procedures corresponding to the receive end in the foregoing method embodiments. In another possible implementation, the apparatus is configured to implement the steps or procedures corresponding to the transmit end in the foregoing method embodiments.

FIG. 12 is a schematic block diagram of a communication apparatus according to an embodiment of this application. As shown in FIG. 12, the communication apparatus 100 may include a communication unit 110 and a processing unit 120. The communication unit 110 may communicate with the outside, and the processing unit 120 is configured to process data. The communication unit 110 may also be referred to as a communication interface or a transceiver unit.

In a possible design, the apparatus 100 may implement the steps or procedures corresponding to the AP (for example, the AP #A or the AP #1) in the foregoing method embodiments. The processing unit 120 is configured to perform processing-related operations of the AP in the foregoing method embodiments, and the communication unit 110 is configured to perform sending/receiving-related operations of the AP in the foregoing method embodiments.

In another possible design, the apparatus 100 may implement the steps or procedures corresponding to the STA (for example, the STA #A or the STA #1) in the foregoing method embodiments. The communication unit 110 is configured to perform sending/receiving-related operations of the STA in the foregoing method embodiments, and the processing unit 120 is configured to perform processing-related operations of the STA in the foregoing method embodiments.

It should be understood that the apparatus 100 is presented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 100 may be specifically the AP in the foregoing embodiments, and may be configured to perform the procedures and/or the steps corresponding to the AP in the foregoing method embodiments. Alternatively, the apparatus 100 may be specifically the STA in the foregoing embodiments, and may be configured to perform the procedures and/or the steps corresponding to the STA in the foregoing method embodiments. To avoid repetition, details are not described herein again.

The apparatus 100 in each of the foregoing solutions has a function of implementing the corresponding steps performed by the AP in the foregoing methods, or the apparatus 100 in each of the foregoing solutions has a function of implementing the corresponding steps performed by the STA in the foregoing methods. The function may be implemented by hardware, or may be implemented by hardware executing corresponding software. The hardware or software includes one or more modules corresponding to the foregoing function. For example, the communication unit may be replaced with a transceiver (for example, a sending unit in the communication unit may be replaced with a transmitter, and a receiving unit in the communication unit may be replaced with a receiver), and another unit such as the processing unit may be replaced with a processor, to separately perform sending/receiving operations and processing-related operations in the method embodiments.

In addition, the communication unit may alternatively be a transceiver circuit (for example, the transceiver circuit may include a receiver circuit and a transmitter circuit), and the processing unit may be a processing circuit. In this embodiment of this application, the apparatus in FIG. 12 may be the AP or the STA in the foregoing embodiments, or may be a chip or a chip system, for example, a system on chip (system on chip, SoC). The communication unit may be an input/output circuit or a communication interface. The processing unit is a processor, a microprocessor, or an integrated circuit integrated on the chip. This is not limited herein.

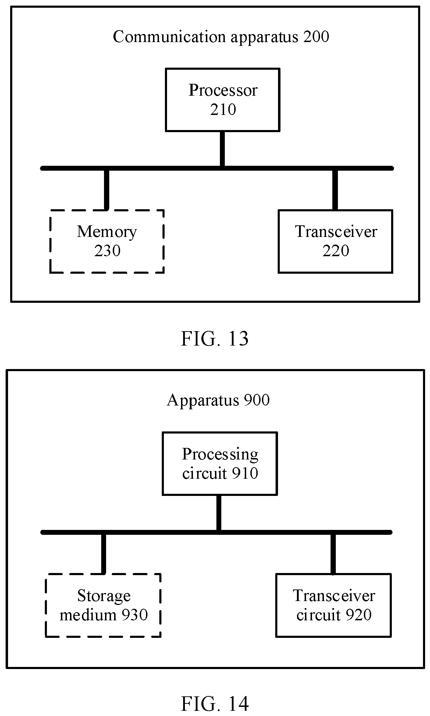

FIG. 13 shows a communication apparatus 200 according to an embodiment of this application. The apparatus 200 includes a processor 210 and a transceiver 220. The processor 210 and the transceiver 220 communicate with each other through an internal connection path, and the processor 210 is configured to execute instructions, to control the transceiver 220 to send a signal and/or receive a signal.

Optionally, the apparatus 200 may further include a memory 230. The memory 230 communicates with the processor 210 and the transceiver 220 through an internal connection path. The memory 230 is configured to store instructions, and the processor 210 may execute the instructions stored in the memory 230. In a possible implementation, the apparatus 200 is configured to implement the procedures and steps corresponding to the AP (for example, the AP #A or the AP #1) in the foregoing method embodiments. In another possible implementation, the apparatus 200 is configured to implement the procedures and steps corresponding to the STA (for example, the STA #A or the STA #1) in the foregoing method embodiments.

It should be understood that the apparatus 200 may be specifically the AP or the STA in the foregoing embodiments, or may be a chip or a chip system. Correspondingly, the transceiver 220 may be a transceiver circuit of the chip. This is not limited herein. Specifically, the apparatus 200 may be configured to perform the steps and/or the procedures corresponding to the transmit end or the receive end in the foregoing method embodiments. Optionally, the memory 230 may include a read-only memory and a random access memory, and provide instructions and data to the processor. A part of the memory may further include a non-volatile random access memory. For example, the memory may further store information about a device type. The processor 210 may be configured to execute the instructions stored in the memory. When the processor 210 executes the instructions stored in the memory, the processor 210 is configured to perform the steps and/or the procedures corresponding to the AP or the STA in the foregoing method embodiments.

In an implementation process, the steps in the foregoing methods can be implemented by using a hardware integrated logical circuit in the processor, or by using instructions in a form of software. The steps of the methods disclosed with reference to embodiments of this application may be directly executed and accomplished through a hardware processor, or may be executed and accomplished by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments can be implemented by using a hardware integrated logic circuit in the processor, or by using instructions in a form of software. The processor may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, any conventional processor, or the like. The steps of the methods disclosed with reference to embodiments of this application may be directly executed and accomplished through a hardware decoding processor, or may be executed and accomplished by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

FIG. 14 shows a communication apparatus 300 according to an embodiment of this application. The apparatus 300 includes a processing circuit 310 and a transceiver circuit 320. The processing circuit 310 and the transceiver circuit 320 communicate with each other through an internal connection path, and the processing circuit 310 is configured to execute instructions, to control the transceiver circuit 320 to send a signal and/or receive a signal.

Optionally, the apparatus 300 may further include a storage medium 330. The storage medium 330 communicates with the processing circuit 310 and the transceiver circuit 320 through an internal connection path. The storage medium 330 is configured to store instructions, and the processing circuit 310 may execute the instructions stored in the storage medium 330. In a possible implementation, the apparatus 300 is configured to implement the procedures and steps corresponding to the AP (for example, the AP #A or the AP #1) in the foregoing method embodiments. In another possible implementation, the apparatus 300 is configured to implement the procedures and steps corresponding to the STA (for example, the STA #A or the STA #1) in the foregoing method embodiments.

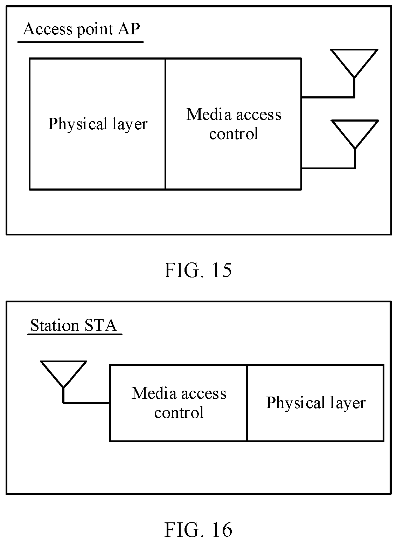

FIG. 15 shows a diagram of an internal structure of an AP product. The AP may have a plurality of antennas or may have a single antenna. In the figure, the AP includes a physical layer (physical layer, PHY) processing circuit and a media access control (media access control, MAC) processing circuit. The physical layer processing circuit may be configured to process a physical layer signal, and the MAC layer processing circuit may be configured to process a MAC layer signal.

FIG. 16 shows a diagram of an internal structure of a STA product. The STA product is usually a terminal device that supports 802.11 series standards, such as a mobile phone or a notebook computer. This figure shows a diagram of a structure of a STA with a single antenna. In an actual scenario, the STA may be a device with a plurality of antennas, and may be a device with more than two antennas. In the figure, the STA may include a PHY layer processing circuit and a MAC layer processing circuit. The physical layer processing circuit may be configured to process a physical layer signal, and the MAC layer processing circuit may be configured to process a MAC layer signal.

According to the methods provided in embodiments of this application, this application further provides a computer program product. The computer program product includes computer program code. When the computer program code is run on a computer, the computer is enabled to perform the method in the embodiment shown in FIG. 7 or FIG. 11.

According to the methods provided in embodiments of this application, this application further provides a computer-readable medium. The computer-readable medium stores program code. When the program code is run on a computer, the computer is enabled to perform the method in the embodiment shown in FIG. 7 or FIG. 11.

According to the methods provided in embodiments of this application, this application further provides a system. The system includes the foregoing one or more stations and the foregoing one or more access points.

A person of ordinary skill in the art may be aware that, in combination with the units and algorithm steps in the examples described in embodiments disclosed in this specification, this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiment. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, to be specific, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for sending a trigger frame, wherein the method comprises:
generating, by an access point AP, a trigger frame, wherein the trigger frame comprises a first user information field corresponding to a first station STA, the first user information field comprises a first spatial stream allocation subfield and first information, the first information indicates a mode in which the first STA transmits data, the mode comprises a multi-user multiple input multiple output, MU-MIMO, mode or a non multi-user multiple input multiple output, non-MU-MIMO, mode, and spatial stream allocation information that is carried in the first spatial stream allocation subfield and that is of the first STA corresponds to content indicated in the first information; and
sending, by the AP, the trigger frame.

2. The method according to claim 1, wherein when the first information indicates that the first STA transmits data in an MU-MIMO mode, the spatial stream allocation information corresponding to the first STA comprises starting stream location information and first stream quantity information, wherein the starting stream location information indicates a starting location of a stream corresponding to the first STA, and the first stream quantity information indicates a quantity of streams corresponding to the first STA; or
when the first information indicates that the first STA transmits data in a non-MU-MIMO mode, the spatial stream allocation information corresponding to the first STA comprises a second stream quantity information, wherein the second stream quantity information indicates a quantity of streams corresponding to the first STA.

3. The method according to claim 2, wherein the starting stream location information occupies 4 bits, the first stream quantity information occupies 2 bits, and
the second stream quantity information occupies 4 bits.

4. The method according to claim 2 or 3, wherein when the first information indicates that the first STA transmits data in an MU-MIMO mode, the first spatial stream allocation subfield occupies 6 bits; or
when the first information indicates that the first STA transmits data in a non-MU-MIMO mode, the first spatial stream allocation subfield occupies 4 bits.

5. The method according to any one of claims 1 to 4, wherein the first information occupies at least 1 bit.

6. The method according to any one of claims 1 to 5, wherein the first information is carried in a reserved subfield in the first user information field; or
the first information is carried in an uplink forward error correction coding type subfield in the first user information field; or
the first information is carried in a resource unit allocation subfield in the first user information field.

7. The method according to any one of claims 1 to 6, wherein the first user information field comprises a resource unit allocation subfield, the resource unit allocation subfield is used to carry a first resource unit group corresponding to the first STA, the first resource unit group comprises at least one resource unit, and
when a quantity of subcarriers corresponding to the first resource unit group is greater than a first threshold, the first user information field does not comprise an uplink forward error correction coding type subfield, wherein the first threshold is determined based on a required quantity of subcarriers corresponding to a data coding scheme.

8. The method according to claim 7, wherein the first threshold is 242.

9. The method according to any one of claims 1 to 7, wherein the first user information field comprises the resource unit allocation subfield, the resource unit allocation subfield is used to carry the first resource unit group corresponding to the first STA, the first resource unit group comprises at least one resource unit, and
when the quantity of subcarriers corresponding to the first resource unit group is less than a second threshold, the first STA transmits data in a non-MU-MIMO mode by default, wherein the second threshold is determined based on a quantity of subcarriers corresponding to an MU-MIMO mode.

10. The method according to claim 9, wherein the second threshold is 242 or 484.

11. The method according to any one of claims 1 to 10, wherein the first user information field comprises the resource unit allocation subfield, the resource unit allocation subfield is used to carry the first resource unit group corresponding to the first STA, the first resource unit group comprises at least one resource unit, and
when the quantity of subcarriers corresponding to the first resource unit group is equal to the first threshold, and the quantity of subcarriers corresponding to the first resource unit group is equal to the second threshold, data coding information is carried in the resource unit allocation subfield in the first user information field; or
when the quantity of subcarriers corresponding to the first resource unit group is equal to the first threshold, and the quantity of subcarriers corresponding to the first resource unit group is equal to the second threshold, the first information is carried in the resource unit allocation subfield in the first user information field, wherein
the first threshold is determined based on the required quantity of subcarriers corresponding to the data coding scheme, and the second threshold is determined based on the required quantity of subcarriers corresponding to an MU-MIMO mode.

12. The method according to any one of claims 1 to 11, wherein the first user information field comprises the resource unit allocation subfield, the resource unit allocation subfield is used to carry a first resource unit corresponding to the first STA, and
when a bandwidth indicated in an uplink bandwidth subfield in a common information field of the trigger frame is greater than a third threshold, the resource unit allocation subfield comprises 9 bits.

13. The method according to claim 12, wherein the third threshold is 160 MHz.

14. A method for receiving a trigger frame, wherein the method comprises:
receiving, by a first station STA, a trigger frame, wherein the trigger frame comprises a first user information field corresponding to the first STA, the first user information field comprises a first spatial stream allocation subfield and first information, the first information indicates a mode in which the first STA transmits data, the mode comprises a multi-user multiple input multiple output, MU-MIMO, mode or a non multi-user multiple input multiple output, non-MU-MIMO, mode, and a spatial stream allocation information that is carried in the first spatial stream allocation subfield and that is of the first STA corresponds to content indicated in the first information; and
sending, by the first STA, uplink data based on information carried in the first user information field.

15. The method according to claim 14, wherein when the first information indicates that the first STA transmits data in an MU-MIMO mode, the spatial stream allocation information corresponding to the first STA comprises a starting stream location information and a first stream quantity information, wherein the starting stream location information indicates a starting location of a stream corresponding to the first STA, and the first stream quantity information indicates a quantity of streams corresponding to the first STA; or
when the first information indicates that the first STA transmits data in a non-MU-MIMO mode, the spatial stream allocation information corresponding to the first STA comprises second stream quantity information, wherein the second stream quantity information indicates a quantity of streams corresponding to the first STA.

16. The method according to claim 15, wherein the starting stream location information occupies 4 bits, the first stream quantity information occupies 2 bits, and
the second stream quantity information occupies 4 bits.

17. The method according to claim 15 or 16, wherein when the first information indicates that the first STA transmits data in an MU-MIMO mode, the first spatial stream allocation subfield occupies 6 bits; or
when the first information indicates that the first STA transmits data in a non-MU-MIMO mode, the first spatial stream allocation subfield occupies 4 bits.

18. The method according to any one of claims 14 to 17, wherein the first information occupies at least 1 bit.

19. The method according to any one of claims 14 to 18, wherein the first information is carried in a reserved subfield in the first user information field; or
the first information is carried in an uplink forward error correction coding type subfield in the first user information field; or
the first information is carried in a resource unit allocation subfield in the first user information field.

20. The method according to any one of claims 14 to 19, wherein the first user information field comprises a resource unit allocation subfield, the resource unit allocation subfield is used to carry a first resource unit group corresponding to the first STA, the first resource unit group comprises at least one resource unit, and
when a quantity of subcarriers corresponding to the first resource unit group is greater than a first threshold, the first user information field does not comprise an uplink forward error correction coding type subfield, wherein the first threshold is determined based on a required quantity of subcarriers corresponding to a data coding scheme.

21. The method according to claim 20, wherein the first threshold is 242.

22. The method according to any one of claims 14 to 21, wherein the first user information field comprises the resource unit allocation subfield, the resource unit allocation subfield is used to carry the first resource unit group corresponding to the first STA, the first resource unit group comprises at least one resource unit, and
when the quantity of subcarriers corresponding to the first resource unit group is less than a second threshold, the first STA transmits data in a non-MU-MIMO mode by default, wherein the second threshold is determined based on a quantity of subcarriers corresponding to an MU-MIMO mode.

23. The method according to claim 22, wherein the second threshold is 242 or 484.

24. The method according to any one of claims 14 to 22, wherein the first user information field comprises the resource unit allocation subfield, the resource unit allocation subfield is used to carry the first resource unit group corresponding to the first STA, the first resource unit group comprises at least one resource unit, and
when the quantity of subcarriers corresponding to the first resource unit group is equal to the first threshold, and the quantity of subcarriers corresponding to the first resource unit group is equal to the second threshold, data coding information is carried in the resource unit allocation subfield in the first user information field; or
when the quantity of subcarriers corresponding to the first resource unit group is equal to the first threshold, and the quantity of subcarriers corresponding to the first resource unit group is equal to the second threshold, the first information is carried in the resource unit allocation subfield in the first user information field, wherein
the first threshold is determined based on the required quantity of subcarriers corresponding to the data coding scheme, and the second threshold is determined based on the required quantity of subcarriers corresponding to an MU-MIMO mode.

25. The method according to any one of claims 14 to 24, wherein the first user information field comprises the resource unit allocation subfield, the resource unit allocation subfield is used to carry a first resource unit corresponding to the first STA, and
when a bandwidth indicated in an uplink bandwidth subfield in a common information field of the trigger frame is greater than a third threshold, the resource unit allocation subfield comprises 9 bits.

26. The method according to claim 25, wherein the third threshold is 160 MHz.

27. A wireless communication apparatus, comprising:
a unit configured to implement the method according to any one of claims 1 to 13; or
a unit configured to implement the method according to any one of claims 14 to 26.

28. A computer-readable storage medium, wherein the computer-readable storage medium stores a computer program, and when the computer program is run,
an apparatus is enabled to perform the method according to any one of claims 1 to 13, or
an apparatus is enabled to perform the method according to any one of claims 14 to 26.

29. A chip system, comprising a processor, configured to invoke a computer program from a memory and run the computer program,
to enable a communication apparatus on which the chip system is installed to perform the method according to any one of claims 1 to 13; or
to enable a communication apparatus on which the chip system is installed to perform the method according to any one of claims 14 to 16.

30. A communication system, comprising:
an access point AP, configured to perform the method according to any one of claims 1 to 13; and
at least one station STA, configured to perform the method according to any one of claims 14 to 26.
